(19) Europäisches Patentamt
European Patent Office
Office européen des brevets

(11) **EP 4 530 063 A1**

(12) **EUROPEAN PATENT APPLICATION**

(43) Date of publication:
**02.04.2025   Bulletin 2025/14**

(21) Application number: 23200618.9

(22) Date of filing: **28.09.2023**

(51) International Patent Classification (IPC):
***B32B 17/10*** (2006.01)

(52) Cooperative Patent Classification (CPC):
**B32B 17/10036; B32B 17/10174; B32B 17/10339;
B32B 17/10807;** B32B 2307/418; B32B 2307/7376

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: AGP Worldwide Operations GmbH
6300 Zug (CH)

(72) Inventors:
• **KRASNOV, Alexey**
**Canton, Michigan, 48188 (US)**

• **GOSSEN, Stefan**
**52070 Aachen (DE)**
• **ROJAS VALLE, Merlyn**
**15081 Cercado de Lima, Lima (PE)**
• **VINATEA CHÁVEZ, Camilo Jorge**
**15081 Cercado de Lima, Lima (PE)**

(74) Representative: **ABG Intellectual Property Law,
S.L.**
**Avenida de Burgos, 16D**
**Edificio Euromor**
**28036 Madrid (ES)**

(54) **A GLAZING WITH GRADIENT COLOR**

(57)    The present invention falls in the field of automotive glazing and relates to a glazing for a vehicle with a color gradient. The invention also relates to automotive sidelites, windshields, backlites, rear quarter windows, sidedoors and roofs comprising said glazing. The invention also relates to a method for manufacturing such automotive glazing with a color gradient.

EP 4 530 063 A1

**Description**

## FIELD OF THE INVENTION

The present invention falls in the field of automotive glazing and relates to a glazing for a vehicle with a color gradient. The invention also relates to automotive sidelites, windshields, backlites, rear quarter windows, sidedoors and roofs comprising said glazing. The invention also relates to a method for manufacturing such automotive glazing with a color gradient.

## BACKGROUND OF THE INVENTION

Generally, the colored aesthetics of conventional automotive glazing for a vehicle, such as a roof or window, is limited to a tinted zone with a neutral color reflected outwards uniformly distributed across a part or the entirety of the glazing surface.

Today, there is a growing demand for customizing the exterior aesthetics of some parts or all automotive glazing. This customization extends beyond a single uniform color to a color that changes according to a gradient pattern across the glazing surface. Depending on the desired final appearance, it becomes necessary to offer automotive glazing that can be provided in a wide variety of different color gradients, including metallic colors, or finishes.

Laminated automotive glazing, composed of at least two glass layers with a synthetic bonding interlayer interposed between the two glass layers, is widely used in the state of the art. Laminated glazing having both a uniform color and a color gradient are known. In such laminated automotive glazing, the bonding interlayer is colored, either by a uniformly distributed or a graded pattern of pigment, depending on the desired result, and to obtain this coloring the bonding interlayer is formed by a colored thick film. In the present invention, a thick-film for a bonding layer refers to a film with a thickness range between 0.1 and 2 mm. These colored thick interlayers, when used for a large area laminated automotive glazing, are expensive, prone to wrinkling in large formats, and have a limited color range.

These colored bonding layers can additionally provide a variety of functions, such as acoustical attenuation, solar control, wedged shape for compatibility with some types of head-up displays (HUDs) and reduced light transmission for wide shade bands.

In this regard, there is a need in the field of automotive glazing for a glazing having an exterior gradient color in desired zones and that such reflected color gradient is aesthetically appealing as well as well-controlled, wherein the automotive glazing is capable of having one or more complex coating layers, and wherein the automotive glazing has a lower cost and better compatibility with large-format glazing compared to colored bonding interlayers.

There is also a need in the art for a sidelite, windshield, backlite, rear quarter, a sidedoor and a roof, suitable for vehicle installation, that comprise a glazing with the aforementioned characteristics.

Finally, there is also a need in the art for a method for manufacturing such an automotive glazing with the aforementioned needs.

## DESCRIPTION OF THE INVENTION

The present invention provides a solution to the aforementioned issues by providing an automotive glazing with gradient color according to independent claim 1, a roof, a windshield, a sidelite, or a rear quarter window for a vehicle, comprising at least one automotive glazing according to claim 8, a vehicle according to claim 9, and a method for manufacturing the automotive glazing according to claim 10. In dependent claims, preferred embodiments of the invention are defined.

*In a first inventive aspect, the present invention provides an automotive glazing, comprising:*

- *a first glass layer having an outer major surface and an inner major surface, wherein the outer major surface is opposite to the inner major surface;*

- *a second glass layer having an inner major surface and an outer major surface, wherein the outer major surface is opposite to the inner major surface;*

- *at least one bonding interlayer arranged between the inner major surface of the first glass layer and the inner major surface of the second glass layer; and*

- *a thin-film coating arranged on at least a portion of at least one of said inner or outer major surfaces of the glass layers, wherein said thin-film coating comprises at least one layer having a gradient in at least one direction of at least one of its characteristics from the following list:*

*a) physical thickness,*

*b) index of refraction,*

*wherein the gradient of at least one of said characteristics is at least 2%;*
*the automotive glazing thus comprising at least a coated portion:*

*having a reflected color gradient in at least one direction of ΔE equal to or greater than 5 across the coated portion of at least one of said inner or outer major surfaces of the glass layers,*

*wherein ΔE is defined as:*

$$\Delta E = \sqrt{\Delta L^{*2} + \Delta a^{*2} + \Delta b^{*2}},$$

*wherein ΔL\*, Δa\* and Δb\* represent the variations in the reflected L\*, a\* and b\* color coordinates of the coated portion of the automotive glazing measured from one outer major surface of the outer major surfaces.*

The automotive glazing of the present invention comprises two glass layers, namely a first and a second glass layer. In some embodiments, the automotive glazing further comprises one or more additional glass layers, wherein the inner glass layer of an additional adjacent glass layer is bonded together to an outer major surface of the first or second glass layer by at least one additional bonding interlayer.

The automotive glazing of the present invention is preferably laminated.

The first glass layer has an outer major surface and an inner major surface. Similarly, the second glass layer has an inner major surface and an outer major surface. The inner major surface of the first glass layer is arranged facing the inner major surface of the second glass layer. In an operating position of the automotive glazing, with the automotive glazing mounted as part of a vehicle, the outer major surface of the first glass layer is the surface of the glazing facing the exterior of the vehicle and the outer major surface of the second glass layer is the surface of the glazing facing the interior of the vehicle.

At least one bonding interlayer is arranged between the inner major surface of the first glass layer and the inner major surface of the second glass layer to keep the glass layers bonded together. In the context of the present invention, the term "between" in the phrase "at least one bonding interlayer is arranged between the inner major surface of the first glass layer and the inner major surface of the second glass layer" should be understood to mean that the at least one bonding interlayer is arranged at any location between the inner major surface of the first glass layer and the inner major surface of the second glass layer, but not necessarily in a physical contact with one of the inner major surfaces of the first or second glass. In other words, the at least one bonding interlayer may be disposed on the inner major surface of the first glass layer, on the inner major surface of the second glass layer, or in a position between both inner major surfaces but with at least the thin-film coating or any other layer interposed therebetween.

The automotive glazing comprises at least a thin-film coating arranged on at least a portion of at least one of the inner or outer major surfaces of the first or second glass layer.

The thin-film coating comprises at least one layer having a gradient in at least one direction of the physical thickness and/or the index of refraction of said at least one layer, wherein the gradient of at least one of its characteristics (physical thickness and index of refraction) is at least 2%.

As a result of this new configuration, the automotive glazing thus comprises at least a coated portion having a reflected color gradient in at least one direction of ΔE equal to or greater than 5 across the coated portion of at least one of said inner or outer major surfaces of the glass layers. The ΔE is defined as:

$$\Delta E = \sqrt{\Delta L^{*2} + \Delta a^{*2} + \Delta b^{*2}},$$

and
wherein ΔL\*, Δa\* and Δb\* represent the variations in the reflected L\*, a\* and b\* color coordinates of the coated portion of the automotive glazing measured from one outer major surface of the outer major surfaces of the first and second glass layers.

It's important to note that the reflected color gradient corresponds to the difference between two distinct points (Point 1 and Point 2) on the automotive glazing that have undergone changes due to the application of the graded coating.

Point 1 corresponds to a specific measured point on the area with color gradient, which could represent a starting or reference point. Point 2 corresponds to another distinct measured point on the area with color gradient, selected to assess the change from Point 1.

The ΔE value obtains the difference in color of L*, a* and b* values between Point 1 and Point 2. In essence, for each variable L*, a* and b*, the values at Point 1 are compared with those at Point 2.

Accordingly, ΔE for two points would be defined as:

$$\Delta E = \sqrt{\Delta L^{*2} + \Delta a^{*2} + \Delta b^{*2}},$$

Wherein:

$$\Delta L^* = L_2 - L_1;$$

$$\Delta a^* = a_2 - a_1;$$

$$\Delta b^* = b_2 - b_1.$$

Advantageously, by using at least one thin-film coating comprising at least one layer having a gradient of at least 2% in at least one direction of its physical thickness and/or of its index of refraction, the automotive glazing comprises at least a coated portion having a customized reflected color gradient in at least one direction of ΔE≥5 across the coated portion of at least one of said inner or outer major surfaces of the glass layers, thus allowing an optimal customized aesthetic when visually observing the automotive glazing from the outside of the glazing.

In the context of the present invention, the reflected color gradient in at least one direction of ΔE≥5 across the coated portion of at least one of said inner or outer major surfaces of the glass layers of the automotive glazing allows not only the gradation in at least a certain direction of a particular hue, for example from light grey to darker grey, or the gradation in at least one direction from one hue to another one, for example from grey to green, but also the gradation in at least a certain direction of color saturation and/or light transmission over the covered area. A gradation in at least a certain direction of color saturation and/or light transmission over the covered area means, for example, that the at least a coated portion of the automotive glazing can stay within the same hue but vary in light transmittance, such as from dark grey to light grey or from dark grey to transparent and neutral. Therefore, in some embodiments, the automotive glazing according to the first inventive aspect can provide optimal control of the color intensity gradient in at least a coated portion. In other embodiments, the automotive glazing according to the first inventive aspect can provide optimal control of the reflected color gradient in at least a coated portion.

In an embodiment, the at least a coated portion of the automotive glazing comprises more than one continuous portion, according to the desired purpose. For example, a coated portion of the automotive glazing comprises at least a color hue graded sub-portion, an intermediate changing color saturation and/or light transmission graded sub-portion and a transparent (non-graded) sub-portion. In another example, the automotive glazing comprises at least a non-transparent color hue graded sub-portion, an intermediate changing color saturation and/or light transmission graded sub-portion and a semi-transparent color hue and/or saturation graded sub-portion. In a further another example, the automotive glazing comprises more than three differentiated continuous sub-portions.

In all examples, the automotive glazing comprises at least a coated portion that has a reflected color gradient of ΔE equal to or greater than 5, in at least one direction across the coated portion.

In the context of the present invention, the term "transparent thin-film coating" refers to a thin-film coating having a transmittance in the visible light spectrum of more than 70%. Values ranging from above 30% to less than 70% correspond to semi-transparent regions of the thin-film layer(s). In the context of the present invention, the Visible Light Transmission (Tvis), also known as Visible Light Transmittance parameter for the glazing comprising the coating, is measured according to the International Organization for Standardization Standard ISO 9050:2003, "Glass in building - Determination of light transmittance, solar direct transmittance, total solar energy transmittance, ultraviolet transmittance and related glazing factors" (ISO 9050:2003)".

In the context of the present invention, the term "transparent portion of an automotive glazing" refers to a portion of an automotive glazing having a transmittance in the visible light spectrum of more than 70%. Values of transmittance in the visible light spectrum ranging from above 30% to less than 70% refer to a "semi-transparent portion of an automotive glazing".

Advantageously, because the reflected color gradient in at least one direction of ΔE equal to or greater than 5 of at least a coated portion of the automotive glazing is produced by the use of at least a thin-film coating comprising at least one layer having a gradient in at least one direction of its physical thickness and/or its index of refraction, wherein the gradient of at least one of said characteristics is at least 2%; instead of using the conventional graded color interlayer, the use of expensive colored thick bonding interlayers is no longer required. This makes the automotive glazing according to the first aspect of the invention a more cost-effective solution. For simplicity, the term "thin-film coating comprising at least one layer having a gradient in at least one direction of its physical thickness and/or its index of refraction, wherein the gradient of at least one of the physical thickness and/or its index of refraction is at least 2%" will henceforth be referred to as a "graded thin-film coating" or simply "thin-film coating".

The following terminology is used along the whole document to describe features of the invention.

In the context of the present invention, the term "glazing" should be understood as a product comprised of at least one layer of a transparent or substantially transparent material, preferably glass, which serves to provide for the transmission of light and/or to provide for viewing of the side opposite to the viewer and which is mounted in an opening in a building, vehicle, wall or roof or other framing member or enclosure.

In the context of the present invention, the term "layer" shall include the common definition of the word, i.e.: a sheet, quantity, or thickness, of material, typically of some homogeneous substance.

In the context of the present invention, the term "glass" should be understood as an organic and inorganic material of the many organic and inorganic materials. From a scientific standpoint, "glass" is defined as a state of matter comprising a non-crystalline amorphous solid that lacks the long-range ordered molecular structure of true solids. Glasses have the mechanical rigidity of crystals with the random structure of liquids. The types of glass that may be used include but are not limited to the common soda-lime variety typical of automotive glazing as well as aluminosilicate, lithium aluminosilicate, borosilicate, glass ceramics, and the various other inorganic solid amorphous compositions which undergo a glass transition and are classified as glass. The glass layers may be comprised of heat absorbing glass compositions as well as infrared reflecting and other types of coatings.

In the context of the present invention, the term "glass substrate" should be understood as a sheet, quantity, or thickness of material, typically of some homogeneous substance. The "glass substrate" may comprise one or more layers. The glass substrate can be, for example, clear float glass or tinted or colored glass. The glass substrate or the glass layer can be of any desired dimensions, e.g., length, width, shape, or thickness.

In the context of the present invention, the term "laminated glazing" refers to a laminated glazing having at least two glass layers respectively. "Laminates", in general, are products comprised of multiple sheets of thin, relative to their length and width, material, with each thin sheet having two oppositely disposed major faces and typically of a relatively uniform thickness, which are permanently bonded to each other across at least one major face of each sheet.

In the context of the present invention, the term "stack" refers to the arrangement in a pile manner of a plurality of layers.

In the context of the present invention, the term, as for one individual layer of a coating, "the top" or "the top surface" of such individual layer has to be understood as the side of the layer furthest from the substrate while "the bottom" or the "bottom surface" has to be understood as the side of the layer which is either in contact with the substrate or oriented towards the substrate in case this layer is not the one layer of the coating stack.

In the context of the present invention, the term "thin-film coating" should be understood as a coating having one or more layers, wherein the thin-film coating has a total thickness comprised between 0.1 and 500 nanometers. On the other hand, in the context of the present invention, a thick film (or a thick layer) should be understood as a layer such as a thermoplastic layer with thickness ranging between 0.1 and 1 mm. It should be noted that technical literature does consider film stacks from 500 to thousands of nm as thin-film coatings. Some of such coatings, e.g., specialty optical filters, comprise hundreds to tens of thousands of nano-scale layers. These coatings, however, are deposited on small scale over long cycle times and are, typically, very expensive. The coatings disclosed in the present invention, on the other hand, are deposited in in-line large-scale coaters, are limited to, typically, less than 30 layers, and are 'economical' enough to be used in consumer applications, such as automotive and architectural glazing. The combined thickness of such thin-film coatings does not typically exceed 500 nm.

In the context of the present invention, thickness values are geometric thickness values (also called physical thickness values).

In the context of the present invention, when a range of values is provided in the present document, it should be understood that the two limiting values of the range are also included. For example, if a range of 20 to 100 nm is provided, the values 20 and 100 nm are also included within the range.

In the context of the present invention, the terms "index of refraction", "refractive index" (or "refraction index"), or its acronym IOR are synonyms and may be used interchangeably. It should be understood as a dimensionless number that gives the indication of the light bending ability of that medium (i.e. the material). The refractive index determines how much the path of light is bent, or refracted, when entering a material. The refractive index may vary with wavelength. This, for example, causes white light to split into constituent colors when refracted. This is called dispersion. Light propagation in absorbing materials can be described using a complex-valued refractive index. The imaginary part then handles the attenuation, while the real part accounts for refraction. For most materials the refractive index changes with wavelength by several percent across the visible spectrum. Refractive indices for materials are commonly reported for a single reference wavelength. In the context of the present invention, the refractive index of a layer is measured at a wavelength reference of 550 nm.

In the context of the present invention, the term "emissivity" or its acronym "E" or "ε" is a measure of how much thermal radiation a material's surface, such as an automotive glass roof, emits to its environment. Thermal radiation is electromagnetic radiation that may include both visible radiation (light) and infrared radiation, which is not visible to human eyes. The thermal radiation from very hot objects, for example, is easily visible to the eye. Quantitatively, emissivity is the ratio of the thermal radiation from a surface to the radiation from an ideal black body at the same temperature as given by the Stefan-Boltzmann law. This characteristic is unitless and ranges between 0 and 1. A low-E should be understood as below or equal to 0.3; and preferably below or equal to 0.2.

In the context of the present invention, among the elements of a valuable appearance is the color of for example a vehicle roof laminate. Color can be described mathematically. CIELAB is one of the many color spaces, or chromaticities, and is normally used in automotive and architectural industries. The advantage of the CIELAB color system is that color shifts on the CIELAB diagram are perceived proportionally by the human eye. The CIELAB L*, a*, b* color space mathematically describes all perceivable colors in three dimensions: L* for perceptual lightness, a* for green-red, and b* for blue-yellow. See Hunter Lab, Applications Note, "Insight on Color," Vol. 8, No. 7 (2008). In the CIELAB color space, the L* axis runs from top to bottom. The maximum L* value is 100, which indicates a perfect reflecting diffuser (i.e., the lightest white). The minimum L* value is 0, which indicates a perfect absorber (i.e., the darkest black). Positive a* is red. Negative a* is green. Positive b* is yellow. Negative b* is blue. CIELAB a* or b* values equal to 0 indicate no red-green or blue-yellow color appearance, in which case the article would appear neutral, ranging, depending on the L*, from black, to gray, to white. In contrast, a* or b* values that deviate from 0 indicate that light is spectrally non-uniformly absorbed or reflected. As a* or b* values deviate from 0, the color may no longer appear neutral. One of the most important attributes of the CIELAB model is device independence, which means that the colors are defined independent of their nature of creation or the device they are displayed on. The L*, a*, and b* values of the CIELAB color scale can be obtained using any CIELAB color measurement instrument and are calculated from known formulas. See Hunter Lab, Applications Note, "Insight on Color," Vol. 8, No. 7 (2008). Thus, the uniqueness of the CIELAB space is in its perceived uniformity. A change in the numerical difference between two color coordinates is proportionate to the difference in color perceived by the eye.

In the context of the present invention, the term "reflected color gradient" should be understood as the reflected color gradient of the glazing as seen by a user from outside the glazing, that is to say, when visually observing the glazing from an outer major surface. The term "reflected color gradient" is the same as the "color gradient measured in reflection". The preferred method is to measure the spectral characteristics of the reflected light using a Lambda 1050 UV/VIS/NIR PerkinElmer spectrophotometer at different positions across the graded color area of the glazing. The reflected color in the CIELAB chromaticity color space is evaluated according to the ISO 9050: 2003 standard. When the automotive glazing is installed in a vehicle, the reflectance measurements of the reflected color gradient of ΔE≥5 are made from the outer surface of the installed glazing facing outwards (the so-called exterior side of the installed glazing), so that the installed glazing has an exterior reflected color gradient of ΔE≥5. On the contrary, the reflectance measurements of the reflected color gradient of the glazing of ΔE≤5 are made from the outer surface of the installed glazing facing towards the interior of the vehicle (the so-called interior side of the installed glazing), so that the installed glazing has an interior reflected color gradient of ΔE≤5.

In the context of the present invention, the term "gradient of the physical thickness and/or index of refraction" (G(%)) of the at least one portion of at least the one layer of the thin-film coating is defined as the percentage of change of the value of the physical thickness and/or index of refraction between two distant points of the graded portion of the at least one disposed layer of the thin-film coating in the at least one direction. In particular, it is defined as follows:

$$G(\%) = \frac{\max(\text{final value, initial value}) - \min(\text{final value, initial value})}{\text{maximum value}} * 100;$$

Where, in the previous formula, the final value and the initial value are the values of the physical thickness and/or index of refraction between two distant points of the graded portion of the at least one layer of the thin-film coating, and the maximum value is the maximum value between the final value and the initial value. The gradient always results in a positive value.

With respect to the gradient G(%) of the characteristic a) (i.e. the variation of the physical thickness between two distant points of the graded portion of the at least one layer of the thin-film coating) once the thin-film coating is arranged on a glass layer of the automotive glazing, it preferably varies from 2% to 100%, and more preferably from 5% to 100%. With respect to the gradient G(%) of the characteristic b) (i.e. the variation of the index of refraction variation between two distant points of the graded portion of the at least one layer of the thin-film coating) once the thin-film coating is arranged on a glass layer of the automotive glazing, it preferably varies from 2% to 60%, and more preferably from 5% to 60%.

Advantageously, the at least one layer of the thin-film coating once arranged on an inner or outer major surface of a glass layer of the automotive glazing has a controllably introduced gradient.

In a first example, an automotive glazing according to the first aspect of the invention comprises a thin-film coating having at least one layer, wherein the one layer has a graded portion having two spaced points, P1 and P2. The physical thickness of P1 is 10 nm and the physical thickness of P2 is 100 nm. In this first example, the gradient G(%) of the physical thickness of the graded portion of the at least one layer of the thin-film coating is calculated as follows:

$$G(\%) = \frac{100 - 10}{100} * 100 = 90\%.$$

In a second example, an automotive glazing according to the first aspect of the invention comprises a thin-film coating having at least one layer, wherein the one layer has a graded portion having two spaced points, P1 and P3. The physical thickness of P1 is 10 nm and the physical thickness of P3 is 11 nm. In this second example, the gradient G(%) of the physical thickness of the graded portion of the at least one layer of the thin-film coating is calculated as follows:

$$G(\%) = \frac{11 - 10}{11} * 100 = 9,1\%.$$

In a third example, an automotive glazing according to the first aspect of the invention comprises a thin-film coating having at least one layer, wherein the one layer has a graded portion having two spaced points, P4 and P5. The index of refraction of P4 is 0.5 nm and the index of refraction of P5 is 0.54 nm. In this third example, the gradient G(%) of the index of refraction of the graded portion of the at least one layer of the thin-film coating, wherein the index of refraction is measured at a wavelength reference of 550 nm is calculated as follows:

$$G(\%) = \frac{0,54 - 0,5}{0,54} * 100 = 7,4\%.$$

In a particular embodiment, the reflected color gradient in at least one direction of ΔE≥5 of the automotive glazing is achieved by a graded thickness of the at least one layer of the thin-film coating in at least one direction across all or a portion of the coated glazing surface. In another particular embodiment, the reflected color gradient in at least one direction of ΔE≥5 of the automotive glazing is achieved by a graded distribution of the index of refraction of the at least one layer of the thin-film coating in at least one direction across all or a portion of the coated glazing surface. In a further another particular embodiment, the reflected color gradient in at least one direction of ΔE≥5 of the automotive glazing is achieved by a combination of both a graded thickness and a graded distribution of the index of refraction of the at least one layer of the thin-film coating in at least one direction across all or a portion of the coated glazing surface. In either of the foregoing cases, the resulting automotive glazing has the desired reflected color grading visual effect.

In an embodiment, the type of glass for the first and second glass layer of the laminate glazing include, but are not limited to, common soda-lime variety typical of automotive glazing as well as aluminosilicate, lithium aluminosilicate, borosilicate, glass ceramics, and various other inorganic solid amorphous compositions.

Preferably, the thickness of the glass layer and/or of the additional glass may vary widely and thus be ideally adapted to the requirements of the individual cases. In an embodiment, the thickness of the glass layer and/or of the additional glass of the glazing is lower than 5.0 mm, preferably comprised between 0.3 mm and 5.0 mm, such as between 0.5 mm and 4.0 mm or between 1.0 mm and 3.0 mm. Possible examples of thicknesses of the one glass layer and/or of the additional glass are about 1.5 mm, 1.6 mm, 1.7 mm, 1.8 mm, 1.9 mm, 2.0 mm, 2.1 mm, 2.2 mm, 2.3 mm, 2.4 mm, 2.5 mm, 2.6 mm, 2.7 mm, 2.8 mm, 2.9 mm or 3.0 mm. More preferably, the glass layer and/or of the additional glass is about 2.1 mm thick soda-lime glass layer, including ultra-clear, clear or green soda-lime.

In an embodiment, the at least one bonding interlayer is of a non-gradient color. Preferably, the bonding interlayer is a uniform-color dark, or uniform-color substantially transparent. Preferably, the material selected for the at least one bonding interlayer is a polymer, preferably a thermoplastic polymer, and more preferably a clear thermoset plastic, such as polyvinyl butyral (PVB). Additionally, ethylene vinyl acetate (EVA) or thermoplastic polyurethane (TPU) may be used as bonding layers.

Additional embodiments of the automotive glazing according to the first aspect of the invention may include as a bonding interlayer a plastic interlayer made, for example, of tinted PVB. Tinted PVB interlayers may have different levels of light transmission and can be of different thicknesses.

In an alternative embodiment, the at least one bonding interlayer comprises at least one layer comprising at least a graded color portion. In this alternative embodiment where the at least one bonding layer comprises at least one layer comprising at least a graded color portion, the resulting automotive glazing can advantageously achieve a higher ΔE color for the same distance or the same ΔE in a shorter distance or length due to the combined graded effect of both layers (the at least one graded thin-film coating and the at least one color graded bonding interlayer), compared to the solution using only one graded thin-film.

Preferably, the thickness of the bonding interlayer, clear or tinted, is comprised between 0.3 mm and 2.0 mm, such as between 0.5 mm and 1.0 mm, e.g. about 0.5 mm, 0.6 mm, 0.7 mm, 0.8 mm, 0.9 mm or 1.0 mm. Particular thicknesses for the plastic bonding layer, e.g. a - tinted - PVB interlayer, are for instance 0.38 mm, 0.631 mm, 0.76 mm and 0.81 mm.

In some preferred embodiments, the automotive glazing comprises a single bonding interlayer arranged in a position between the inner major surface of the first glass layer and the inner major surface of the second glass layer. In other embodiments, the automotive glazing comprises more than one bonding interlayer arranged between the respective inner major surfaces of the two glass layers.

In an embodiment, the entire surface of the at least one layer of the thin-film coating has a gradient of at least 2% in at least one direction of the physical thickness and/or the index of refraction of said one layer.

In another embodiment, the at least one layer of the thin-film coating comprises at least one portion having a gradient of at least 2% in at least one direction of the physical thickness and/or the index of refraction of said one layer, and the other portion of the at least one layer of the thin-film coating is a non-graded portion. This non-graded portion can be a uniformly colored portion or a transparent portion. In an embodiment, the one layer of the thin-film coating can also comprise more than two different portions, for example, three portions, wherein the first and third portions are transparent portions, and the second portion comprises a portion having a gradient of at least 2% in at least one direction of the physical thickness and/or the index of refraction of said one layer of the thin-film coating.

In an embodiment, the color gradient of the at least one coated portion of the automotive glazing is monotonic, i.e. of a single color shade that degrades. In another alternative embodiment, the color gradient of the at least one coated portion of the automotive glazing is non-monotonic, i.e. includes more than one color shade.

In an embodiment, the at least one layer of the thin-film coating includes at least a portion with an gradient of at least 2% of the physical thickness and/or the index of refraction of said one layer in more than one direction, for example in two different directions. The at least one direction along which the at least a portion of the one layer of the thin-film coating varies in the physical thickness and/or the index of refraction may be a straight direction. The at least one direction along which the at least a portion of the thin-film coating varies in the physical thickness and/or the index of refraction may be a curved direction. The gradient colored portion of the thin-film coating may have a constant width or a variable width.

In an embodiment, the automotive glazing has a reflected color gradient of $\Delta E \leq 5$, wherein $\Delta E$ is defined as:

$$\Delta E = \sqrt{\Delta L^{*2} + \Delta a^{*2} + \Delta b^{*2}}$$

, and wherein $\Delta L^*$, $\Delta a^*$ and $\Delta b^*$ represent the variations in the reflected L*, a* and b* color coordinates of the coated portion of the automotive glazing measured from the other outer major surface of the glazing corresponding to the opposite surface where the reflected color gradient of $\Delta E \geq 5$ is measured. By the term "other outer major surface of the glazing corresponding to the opposite outer major surface where the reflected color gradient of $\Delta E \geq 5$ is measured", it should be understood that if the reflected color gradient in at least one direction of $\Delta E \geq 5$ is measured from one outer major surface of the two outer major surfaces of the automotive glazing, the reflected color gradient of $\Delta E \leq 5$ is measured from the other outer major surface of the two outer major surfaces of the automotive glazing.

Such a low (of $\Delta E \leq 5$) reflected color gradient measured from the other outer major surface of the two outer major surfaces of the automotive glazing guarantees a uniform color of the automotive glazing from the interior side of the glazing, i.e. from the outer major surface of the glazing facing towards the interior of the vehicle when the automotive glazing is installed in a vehicle.

In an embodiment, the thin-film coating comprises only a single layer having a gradient of at least 2% in at least one direction of the physical thickness and/or the index of refraction of said one layer.

In another embodiment, the thin-film coating further comprises at least one additional layer arranged on the at least one layer of the thin-film coating, wherein said at least one additional layer has a gradient in at least one direction of at least one of its characteristics from the following list:

a) the physical thickness,

b) the index of refraction,

wherein the gradient of at least one of the said characteristics is at least 2%.

In this particular embodiment, the thin-film coating comprises at least two layers with a customized gradient in at least one direction of the physical thickness and/or the index of refraction. When two graded layers are present in the same thin-film coating, their gradients of the physical thickness and/or the index of refraction are preferably in the same direction, thus amplifying and complementing each other.

In the context of the present invention, with respect to said additional graded layer located on the at least one graded layer in the same thin-film coating stack, the term "on" should be understood to include both the option of the graded one layer and the graded additional layer being in direct contact (i.e. physical contact) and the option of one or more additional layers being located between the said one graded layer and the additional graded layer. In an embodiment, the additional graded layer and the at least one graded layer of the same thin-film coating stack are in direct contact with each other.

In this particular embodiment of the automotive glazing comprising in the same thin-film coating stack at least two layers having a gradient of at least 2% in at least one direction of the physical thickness and/or the index of refraction, the desired reflected color grading visual effect in at least one direction having a reflected ∆E equal to or greater than 5 across the coated portion of the automotive glazing is achieved by a graded thickness of the two layers of the thin-film coating in at least one direction across all or a portion of the glazing surface. In a second particular embodiment of a thin-film coating stack having two graded layers, the reflected color grading visual effect in the automotive glazing is achieved by a graded distribution of the index of refraction of the two layers of the thin-film coating in at least one direction across all or a portion of the glazing surface. In a third particular embodiment of a thin-film coating stack having two graded layers, the reflected color grading visual effect in the automotive glazing is achieved by both a graded thickness and a graded distribution of the index of refraction of the two layers of the thin-film coating in at least one direction across all or a portion of the glazing surface.

In some embodiments, the thin-film coating further comprises a non-graded layer or a plurality of non-graded layers, other than the at least one layer having a gradient of at least 2% in at least one direction of the physical thickness and/or the index of refraction of the respective layer(s). When the thin-film coating further comprises a non-graded layer or a plurality of non-graded layers, the at least one layer having a gradient of at least 2% in at least one direction of the physical thickness and/or the index of refraction of the respective layer(s) is arranged at any position in the coating stack. Thus, the at least one layer having a gradient of at least 2% in at least one direction of the physical thickness and/or the index of refraction of said respective layer(s) may be disposed at the bottom surface (i.e. disposed on a glass surface), at any intermediate position or at the top surface of the thin-film coating stack.

In an embodiment, said non-graded layer or layers may comprise one or more solar control functional layers. Preferably, the solar control functional additional layer(s) is/are Ag-based solar-control layer(s), typically consisting of one or more of ZnAlOx, Ag, NiCrOx and ZnAlOx to more efficiently reflect near-IR light to minimize heat absorption by the graded portion. In this embodiment, the graded layer or layers of the thin-film coating stack are outside the solar control portion of the thin-film coating stack.

In other embodiments, as will be described below, the graded thin-film coating comprises one or more solar control functional color graded layers.

In an alternative or additional embodiment to the non-graded solar control functional additional layer(s) of the thin-film coating, an additional coating, such as a non-graded low-emissivity (Low-E) coating, preferably including an indium tin oxide layer, may be arranged, preferably on the outer major surface of the second glass of the automotive glazing.

According to the definition of a thin-film coating given above, the total thickness of the thin-film coating is comprised between 0.1 and 500 nanometres, depending on the number of layers of the thin-film coating. A preferred range of thicknesses for the thin-film coating when having only one layer having a gradient of at least 2% in at least one direction of the physical thickness and/or the index of refraction of the one layer is 20-80 nm, and preferably 40-60 nm, depending on the materials used and intended colors. A preferred range of thicknesses of the thin-film coating comprising two layers (i.e. a one layer and an additional layer on top of the one layer, both having a gradient of at least 2% in at least one direction of the physical thickness and/or the index of refraction of each respective layer) is 40-500 nm, and preferably 100-160 nm, depending on the materials used and intended colors.

In an embodiment, either the at least one layer of the thin-film coating, the at least one additional layer of the thin-film coating, or both, comprise one material selected from the group consisting of: SiNx, NiCrOx, SiAl, NbOx and SiOx. In this embodiment, preferably, the thin-film coating has a sequence of layers arranged in the following order starting from one of said inner or outer major surfaces of the first or second glass layer: SiNx, NiCrOx, SiAl, NbOx, NiCrOx, SiOx, SiNx, SiNx, NiCrOx, SiAl, NbOx, NiCrOx, NbOx, SiOx.

In an alternative embodiment, either the at least one layer of the thin-film coating, the at least one additional layer of the thin-film coating, or both, comprise a material selected from the group consisting of:

a) silver or another electrically conductive material or any combination of one or more conductive materials with one or more non-conductive materials; or

b) Low Emissivity material, preferably indium tin oxide.

In the context of the present invention, an electrically conductive material should be understood as a material conducting electricity, as opposed, for example, to a thermally conductive material.

In a particular case of an automotive glazing having a first and a second glass layers, the inner major surface of the first glass layer faces the inner major surface of the second glass layer, so that the respective outer major surfaces of the first and second glass layers face outwards and correspond to the major opposite exterior sides of the laminate of the glazing. As indicated above, in automotive applications, when the automotive glazing is installed in the vehicle, the outer major glass surface of the second glass layer corresponds to the innermost surface of the glazing, i.e. the surface of the glazing intended to face the interior of the vehicle; while the outer major surface of the first glass layer corresponds to the outermost surface of the glazing, i.e. the surface of the glazing intended to face the exterior of the vehicle in the operating position of the glazing.

In some embodiments, the automotive glazing further comprises, in addition to the first and second glass layers, the at least one bonding interlayer and the thin-film coating, an optional functional layer, such as a switchable film made, e.g., of a polymer-dispersed liquid crystal (PDLC) arranged between two adjacent glass layers. Switchable films which may be used in the context of the present invention include, but are not limited to, Suspended Particle Devices (SPD), Polymer Dispersed Liquid Crystal (PDLC), Polymer Network Liquid Crystal (PNLC), electrochromic (EC) films and Liquid Crystal (LC) films.

In some embodiments, the automotive glazing comprises an additional thin-film coating. In this particular arrangement having two thin-film coatings, for simplicity, the thin-film coating is called first thin-film coating and the additional thin-film coating is called second thin-film coating. In this particular arrangement having two graded thin-film coatings, the second thin-film coating is arranged on at least a portion of at least one of said inner or outer major surfaces of the glass layers where the first thin-film coating is not arranged. In other words a second thin-film coating is arranged on at least a portion of the inner or outer major surface of the other glass layer where the first thin-film coating is arranged. Said second graded thin-film coating has the same features of the first graded thin-film coating, i.e.:

- said second graded thin-film coating comprises at least one layer having a gradient in at least one direction of at least one of its characteristics from the following list:

    a) physical thickness,

    b) index of refraction,

wherein the gradient of at least one of said characteristics is at least 2%.

The term "gradient in at least one direction of the physical thickness and/or index of refraction" of at least one portion of at least one graded layer of the second graded thin-film coating is defined in the same manner as previously explained for the at least one layer of the first graded thin-film coating.

The second graded thin-film coating may comprise one or more layers having the same layer configuration (i.e. the same layers with the same order and the same thicknesses) as previously mentioned for the first graded thin-film coating.

Alternatively, the second graded thin-film coating may comprise one or more layers having a different configuration (i.e. a different number of layers and/or a different order and/or different thicknesses) than those used in the first graded thin-film coating.

Advantageously, when combined in an automotive glazing which is a laminate with one glass layer having a first thin-film coating which produces a reflected color gradient in at least one direction with the other glass layer having a second thin-film coating which produces a reflected color gradient in at least one direction which is the same as or different from the direction of the reflected color gradient of the first thin-film coating, the resulting automotive glazing has a two-dimensional color pattern. Thus, when a user observes the automotive glazing with two different graded thin-film coatings, the user can see the juxtaposition of the two or more color patterns produced by the two thin-film coatings. For example, an automotive glazing according to the first inventive aspect of the invention may have a first glass layer with a first thin-film coating thereon having a reflected color gradient in a longitudinal direction and a second glass layer with a second thin-film coating thereon having a reflected color gradient in a direction orthogonal or at another non-orthogonal angle to the longitudinal direction, resulting in an automotive glazing having a two-dimensional color pattern.

Where the automotive glazing includes two graded thin-film coatings, the first thin-film coating is preferably arranged on at least a portion of the inner major surface of the first glass layer of the laminate and, in another embodiment, the first thin-film coating is arranged on at least a portion of the outer major surface of the first glass layer of the laminate. The second thin-film coating is preferably disposed on at least a portion of the inner major surface of the second glass layer or alternatively on at least a portion of the outer major surface of the second glass layer of the laminate. Any combination of the described preferred locations of the first thin-film coating and the second thin-film coating is possible.

Preferably, the second graded thin-film coating has additional low-E attributes. In an embodiment, at least one of the layers of the second thin-film coating comprise a material selected from the group consisting of a Low Emissivity material, preferably indium tin oxide.

In a particular embodiment, the first and second glass layers of the automotive glazing are bent after the coating deposition.

In some embodiments, the at least one layer of the thin-film coating is deposited on a partially bent glass layer and after that the resulting glazing is fully bent to a desired shape.

In some other embodiments, the at least one layer of the thin-film coating is deposited on a fully bent glass layer without any other additional bending step.

In some other embodiments, the at least one layer of the thin-film coating is deposited on a fully bent and fully laminated glazing without any other additional bending step.

In a further inventive aspect, the present invention provides an automotive glazing, comprising:

- a first glass layer having an outer major surface and an inner major surface, wherein the outer major surface is opposite to the inner major surface;

- a second glass layer having an inner major surface and an outer major surface, wherein the outer major surface is opposite to the inner major surface; and

- at least one bonding interlayer arranged between the inner major surface of the first glass layer and the inner major surface of the second glass layer, said at least one bonding interlayer comprises at least one layer having at least a graded color portion;

the automotive glazing thus comprising at least a colored portion:

having a reflected color gradient in at least one direction of ΔE equal to or greater than 5 across the colored portion of at least one of said inner or outer major surfaces of the glass layers,

wherein ΔE is defined as:

$$\Delta E = \sqrt{\Delta L^{*2} + \Delta a^{*2} + \Delta b^{*2}},$$

wherein ΔL*, Δa* and Δb* represent the variations in the reflected L*, a* and b* color coordinates of the colored portion of the automotive glazing measured from one outer major surface of the outer major surfaces of the automotive glazing.

In some specific cases, for example for small or medium area laminated automotive glazing, it is advantageous to use at least one bonding interlayer comprising at least one layer having at least a graded color portion in the automotive glazing. The automotive glazing can have at least a colored portion having a customized reflected color gradient in at least one direction of ΔE≥5 across the colored portion of at least one of said inner or outer major surfaces of the glass layers, thus allowing an optimal customized aesthetic when visually observing the automotive glazing from the outside of the glazing.

In the context of the present invention, the reflected color gradient in at least one direction of ΔE≥5 across the colored portion of at least one of said inner or outer major surfaces of the glass layers of the automotive glazing according to the further inventive aspect includes not only the gradation in at least a certain direction of a particular hue, for example from light grey to darker grey, or the gradation in at least one direction from one hue to another one, for example from grey to green, but also the gradation in at least a certain direction of color saturation and/or light transmission over the covered area. A gradation in at least a certain direction of color saturation and/or light transmission over the covered area means, for example, that the at least a colored portion of the automotive glazing can stay within the same hue but vary in light transmittance, such as from dark grey to light grey or from dark grey to transparent and neutral. Therefore, in some embodiments, the automotive glazing according to the further inventive aspect can provide optimal control of the color intensity gradient in at least a colored portion. In other embodiments, the automotive glazing according to the further inventive aspect can provide optimal control of the reflected color gradient in at least a colored portion.

In an embodiment according to said further inventive aspect, the automotive glazing may also comprise a thin-film coating arranged on at least a portion of at least one of the inner or outer major surfaces of one of the two glass layers. In an embodiment of the further inventive aspect having at least one color graded bonding interlayer and a thin-film coating, the thin-film coating does not comprise any layer having a gradient of at least 2% in at least one direction of the physical thickness or index of refraction.

Alternatively, the automotive glazing according to the further inventive aspect having at least one color graded bonding interlayer and a thin-film coating, the thin-film coating comprises at least one layer having a gradient in at least one direction of at least one of its characteristics from the following list: a) physical thickness, b) index of refraction, wherein the gradient of at least one of said characteristics is at least 2%. The combination in an automotive glazing of two different graded layers: a color graded bonding interlayer in at least one direction, in combination with a graded thin-film coating in at least one direction, has the effect of providing an enhanced customizable reflected color gradient to the automotive glazing, due to the combined graded effect of both layers (the at least one graded thin-film coating and the at least one color graded bonding interlayer), compared to the solution using only one graded thin-film.

In an embodiment, the automotive glazing according to the first or the further inventive aspect further comprises an obscuration band disposed around a part or all of the periphery of the automotive glazing. The obscuration band is preferably printed on laminated and tempered automotive glazing, and more preferably printed on the periphery of the glass on the outer surface of the second glass layer and/or alternately printed on the inner surface of the first glass layer. The obscuration band can be printed in different areas of the laminated glazing, where optical sensors or cameras need to be placed. The obscuration band has multiple functional and aesthetic requirements. The obscuration band is preferably substantially opaque to prevent the adhesive, used to mount the glazing to the vehicle, from being seen from the outside of the vehicle and to protect the adhesive from the harmful effects of ultra-violet. The obscuration band also serves this same function for components attached to the inside surface of the glazing. On heated and coated glazing, the obscuration band serves to hide the edge of the coating, busbars, leads and any other items that would detract from the appearance of the vehicle. The obscuration band also has the additional aesthetic requirement of being dark black color and a reflective glossy appearance.

The automotive glazing according to the first inventive aspect or the further inventive aspect of the present invention is intended for vehicles, and more particularly for automobiles such as passenger cars (e.g. an automotive roof, windshield, sidelite, backlite, rear quarter window or sidedoor).

In a second inventive aspect, the present invention provides a roof, a windshield, a sidelite, a backlite, a rear quarter window or a sidedoor for a vehicle comprising at least one automotive glazing according to any of the embodiments of the first inventive aspect or the further inventive aspect of the invention.

In a particular embodiment of the sidedoor of the second inventive aspect, the present invention provides a sidedoor for a vehicle, the sidedoor having a length which partially or completely covers the area of the vehicle where the driver and the rear seat passengers sit, the sidedoor preferably being a butterfly door or a gullwing door, wherein the sidedoor comprises at least one automotive glazing according to any of the embodiments of the first inventive aspect or the further inventive aspect of the invention. In this particular embodiment of the second inventive aspect of the invention, a preferred type of sidedoor for a vehicle is a butterfly door and a gullwing door.

In this particular embodiment of a sidedoor for a vehicle, preferably a butterfly or a gullwing door, extra-long continuous side panels can be achieved, for example by combining in a single glazing a rear area of the vehicle where the passengers are located having darker transmitted colors for greater privacy, with a driver's area of the vehicle with clear or transparent transmitted colors to meet legal requirements for light transmission at the front of the vehicle.

The term "butterfly door" in the present invention refers to a car door of the type that moves up and out via hinges along the A-pillar. This makes it easier to get in and out of the car. The term "gull-wing door" in the present invention refers to a car door of the type that is hinged at the roof rather than at the side.

In an embodiment of this particular embodiment of a sidedoor for a vehicle having a length which partially or completely covers the area of the vehicle where the driver and the rear seat passengers sit, the sidedoor comprises an automotive glazing, wherein the automotive glazing comprises:

- a first glass layer having an outer major surface and an inner major surface, wherein the outer major surface is opposite to the inner major surface;

- a second glass layer having an inner major surface and an outer major surface, wherein the outer major surface is opposite to the inner major surface; and

- at least one bonding interlayer arranged between the inner major surface of the first glass layer and the inner major surface of the second glass layer, said at least one bonding interlayer comprises at least one layer having at least a graded color portion;

the automotive glazing thus comprising at least a colored portion:

having a reflected color gradient in at least one direction of ∆E equal to or greater than 5 across the colored portion of at least one of said inner or outer major surfaces of the glass layers,

wherein ∆E is defined as:

$$\Delta E = \sqrt{\Delta L^{*2} + \Delta a^{*2} + \Delta b^{*2}},$$

wherein ∆L*, ∆a* and ∆b* represent the variations in the reflected L*, a* and b* color coordinates of the colored portion of the automotive glazing measured from one major outer surface of the outer major surfaces of the automotive glazing.

In this particular embodiment of a sidedoor for a vehicle having a length which partially or completely covers the area of the vehicle where the driver and the rear seat passengers sit, the fact that the automotive glazing further comprises at least one color graded bonding interlayer provides an enhanced visual color effect and/or privacy.

In a third inventive aspect, the present invention provides a vehicle comprising at least a roof, a windshield, a sidelite, a backlite, a rear quarter window or a sidedoor according to any of the embodiments of the second inventive aspect of the invention. The term "vehicle" in the present invention includes, but is not limited to, road vehicles (e.g. cars, busses, trucks, agricultural and construction vehicles, cabin motorbikes), railway vehicles (e.g. locomotives, coaches), aircraft (e.g. airplanes, helicopters), boats, ships and the like. For instance, the vehicle may be a road vehicle and more particularly a car.

When the automotive glazing according to the first aspect or the further inventive aspect of the present invention is installed in a vehicle, the reflectance measurements of the reflected color gradient of $\Delta E \geq 5$ are made from the outer surface of the installed glazing facing outwards, so that the installed glazing has the exterior reflected color gradient of $\Delta E \geq 5$. On the contrary, the reflectance measurements of the reflected color gradient of the glazing of $\Delta E \leq 5$ are made from the outer surface of the installed glazing facing towards the interior of the vehicle, so that the installed glazing has the interior reflected color gradient of $\Delta E \leq 5$.

In an embodiment of the third inventive aspect of the invention, the vehicle comprises an automotive glazing, wherein the automotive glazing comprises:

- a first glass layer having an outer major surface and an inner major surface, wherein the outer major surface is opposite to the inner major surface;

- a second glass layer having an inner major surface and an outer major surface, wherein the outer major surface is opposite to the inner major surface;

- at least one bonding interlayer arranged between the inner major surface of the first glass layer and the inner major surface of the second glass layer; and

- a thin-film coating arranged on at least a portion of at least one of said inner or outer major surfaces of the glass layers,

    wherein said thin-film coating comprises at least one layer having a gradient in at least one direction of at least one of its characteristics from the following list:

        a) physical thickness,

        b) index of refraction,

    wherein the gradient of at least one of said characteristics is at least 2%;

the automotive glazing thus comprising at least a coated portion:

    having an exterior reflected color gradient in at least one direction of $\Delta E$ equal to or greater than 5 across the coated portion of at least one of said inner or outer major surfaces of the glass layers,

    wherein $\Delta E$ is defined as:

$$\Delta E = \sqrt{\Delta L^{*2} + \Delta a^{*2} + \Delta b^{*2}},$$

    wherein $\Delta L^*$, $\Delta a^*$ and $\Delta b^*$ represent the variations in the exterior reflected $L^*$, $a^*$ and $b^*$ color coordinates of the coated portion of the automotive glazing measured from one major surface of the outer major surfaces.

In a particular embodiment of the third inventive aspect of the invention, the automotive glazing of the vehicle has an interior reflected color gradient of $\Delta E \leq 5$, wherein $\Delta E$ is defined as: $\Delta E = \sqrt{\Delta L^{*2} + \Delta a^{*2} + \Delta b^{*2}}$, wherein $\Delta L^*$, $\Delta a^*$ and $\Delta b^*$ represent the variations in the interior reflected $L^*$, $a^*$ and $b^*$ color coordinates of the coated portion of the automotive glazing measured from the other outer major surface of the glazing corresponding to the opposite surface where the exterior reflected color gradient of $\Delta E \geq 5$ is measured.

*In a fourth inventive aspect, the present invention provides a method for manufacturing an automotive glazing according to any of the embodiments of the first inventive aspect of the invention, the method comprising the steps of:*

- providing a first glass layer having an outer major surface and an inner major surface, wherein the outer major surface is opposite to the inner major surface;

- providing a second glass layer having an inner major surface and an outer major surface, wherein the outer major surface is opposite to the inner major surface;

- depositing a thin-film coating on at least a portion of at least one of said inner or outer major surfaces of the glass layers; wherein the step of depositing the thin-film coating comprises depositing at least one layer of a thin-film coating, wherein the step of depositing the at least one layer of the thin-film coating comprises:

  varying at least one deposition parameter during the step of depositing the at least one layer of a thin-film coating to produce in at least a portion of the automotive glazing a reflected color gradient in at least one direction of ΔE equal to or greater than 5 across the coated portion of at least one of said inner or outer major surfaces of the glass layers, wherein ΔE is defined as: $\Delta E = \sqrt{\Delta L^{*2} + \Delta a^{*2} + \Delta b^{*2}}$ , wherein ΔL*, Δa* and Δb* represent the variations in the reflected L*, a* and b* color coordinates of the coated portion of the automotive glazing measured from one surface of the outer major surfaces,

  wherein the at least one deposition parameter is selected from the group consisting of:

  • the physical thickness of the deposited at least one layer of a thin-film coating, thereby resulting in a variation of the physical thickness of the at least one layer of the thin-film coating;

  • the ratio of gases in a mixture and/or the gas flow rate of at least the working sputtering gas and the tuning gas, wherein;
    the working sputtering gas is preferably argon and the tuning gas, is preferably oxygen or nitrogen, thereby resulting in a variation of the index of refraction of at the least one layer of the thin-film coating; and

  • a gradient of the strength of magnetic field along the sputtering target; and

- laminating the first and second glass layers together with at least one bonding interlayer arranged between the inner major surfaces of the first and second glass layers.

In an embodiment, the method according to the fourth inventive aspect, after the step of depositing the at least one layer of a thin-film coating, the step of depositing a thin-film coating further comprises the step of depositing the at least one additional layer of the thin-film coating on the at least one layer of the thin-film coating. Said step of depositing at least one additional layer of the coating on the at least one layer of the coating is also preferably done by sputtering deposition, preferably magnetron sputtering.

There are several techniques that are known in the state of the art for depositing thin-film coatings on glass substrates. The choice of method depends on factors such as the desired film properties, the type of material being deposited, and the specific application requirements. Preferably, either the step of depositing the at least one layer of a thin-film coating on at least a portion of at least one of said inner or outer major surfaces of the glass layers, the step of depositing the at least an additional layer of a thin-film coating, or both, is by sputtering deposition, preferably by magnetron sputtering. Alternatively, other suitable Chemical Vapor Deposition (CVD) or Physical Vapor Deposition (PVD) such as Electron-Beam evaporation or Thermal Evaporation may also be used to deposit the thin-film coating on a glass layer of the automotive glazing.

In a preferred embodiment of the step of sputtering deposition of the at least one layer of a thin-film coating, the working sputtering gas is pure argon and has the function of sustaining the plasma under the high voltage during the sputtering process. In other embodiments, in addition to the sputtering gas, other gases, so-called tuning gases, preferably oxygen or nitrogen can also be added to the chamber during film growth. In this second embodiment the working sputtering gas is a mixture of gases comprising the working sputtering gas (preferably Ar) and also O2, or N2, or both, the function of these tuning gases being to oxidize or/and nitrodize thin-films where a reactive sputtering process is desired.

In a first embodiment, either the step of depositing the at least one layer, the step of depositing the at least one additional layer, or both, of the thin-film coating of the method according to any described embodiments is by sputtering, and further comprises the step of providing a shield of variable width along the target for varying the at least one deposition parameter during the step of depositing the at least one layer and/or the at least one additional layer of a thin-film coating.

The shield is disposed within the sputtering chamber preferably separated from the material target and also from the glass layer and in a plane substantially parallel to the plane in which the material target and the glass layer are located.

The shield of variable width extends along part or all of the length of the material target. By positioning a shield of variable width along the target within a sputtering chamber, at least the deposition parameter corresponding to the physical thickness of the deposited material of the at least one layer of a thin-film coating can be varied during the deposition step according to the desired color design to be obtained. The shield of variable width is configured with a desired shape and width inclination according to the particular design of the color pattern and is positioned at a location above the glass surface to be deposited by the film coating, such that the shield shades and thus blocks the film deposition from the material target, thereby depositing a patterned thin-film layer on the glass layer where the shield does not cover the glass layer. This deposited patterned thin-film layer has a variable thickness of at least 2% in at least one direction. The controlled change in physical thickness of at least a portion of the deposited thin-film material of at least 2% in at least one direction on the glass layer results in a glazing according to the first inventive aspect having at least a portion with a reflected color gradient in at least one direction.

*In a second embodiment, either the step of depositing the at least one layer of the thin-film coating, the step of depositing the at least one additional layer (3.2), or both, of the method according to any described embodiments is by sputtering, and further comprises the step of providing within a sputtering chamber at least one gas supply pipe with a plurality of openings along the pipe and a controllable gas distribution for varying the at least one deposition parameter during the step of depositing the at least one layer and/or the at least one additional layer of a thin-film coating.* By positioning within a sputtering chamber a gas supply pipe with a plurality of openings along the pipe and a controllable gas distribution through the gas supply pipe, at least one deposition parameter corresponding to the ratio of gases in a mixture and/or the gas flow rate of at least the working sputtering gas and the tuning gas can be varied during the deposition step of the at least one layer of a thin-film coating. The gas supply pipe with a plurality of openings along the pipe and a controllable gas distribution is configured with the necessary orifices arranged along the pipe according to the particular design of the color pattern. The gas supply pipe is also positioned at a location above the glass surface to be deposited by the film coating, such that the gas supply pipe with a plurality of openings together with a controllable gas distribution gradates the content of the tuning gas, preferably oxygen or nitrogen gas during the film deposition, thereby varying the index of reflection and/or the thickness of the deposited thin-film layer on the glass layer by at least 2% in at least one direction. Alternatively or in addition to the content of the tuning gas, the content of the working sputtering gas, preferably argon, in the ratio of the gases in the mixture of the sputtering gas mixture may also be varied and/or the working sputtering gas flow rate can also be varied. The variation of the index of reflection of the thin-film material by at least 2% in at least one direction on the glass layer results in a glazing according to the first aspect of the invention, having at least a coated portion with a reflected color gradient in at least one direction of ΔE≥5 across the coated portion.

In a third embodiment, the step of depositing the at least one layer of a thin-film coating of the method according to any described embodiments is by sputtering, and further comprises the step of providing within a sputtering chamber both (i) at least one gas supply pipe with a plurality of openings along the pipe and a controllable gas distribution and (ii) a shield of variable width along the target for varying the at least one deposition parameter.

In a fourth embodiment, the step of depositing the at least one layer of a thin-film coating of the method according to any of the described embodiments is by magnetron sputtering. Magnetron sputtering is a deposition technology technique in which a gaseous plasma which is generated and confined to a space containing the material to be deposited, the 'target'. The surface of the target is eroded by high-energy ions within the plasma, and the liberated atoms travel through the vacuum environment and deposit onto a substrate to form a thin film. A magnetron sputtering process is characterized by the use of very strong magnets to confine the electrons in the plasma at or near the surface of the target. Confining the electrons not only leads to a higher density plasma and increased deposition rates, but also prevents damage which would be caused by direct impact of these electrons with the substrate or growing film. Magnetron sputter deposition does not require melting and evaporation of the source material, leading to many advantages over other PVD technologies. In this particular embodiment where the deposition of the thin-film layer is by magnetron sputtering, the deposition parameter that is varied during the step of depositing the at least one layer of a thin-film coating is a gradient of the strength of magnetic field along the sputtering target. By varying the gradient of the strength of magnetic field along the sputtering target the grade of confine the electrons in the plasma at or near the surface of the target can be controlled, thereby resulting in a variation of the index of refraction of the at least one layer of the thin-film coating.

*Preferably, either the step of depositing the at least one layer of the thin-film coating, the step of depositing the at least one additional layer of the thin-film coating, or both, comprises depositing a layer of a material selected from the group consisting of: SiNx, NiCrOx, SiAl, NbOx and SiOx.*

*Also preferably, the step of depositing the thin-film coating comprises depositing the following materials of a sequence of layers arranged in the following order starting from one of said inner or outer major surfaces of the glass layers: SiNx, NiCrOx, SiAl, NbOx, NiCrOx, SiOx, SiNx, SiNx, NiCrOx, SiAl, NbOx, NiCrOx, NbOx, SiOx.*

In an embodiment, the resulting automotive glazing obtained by the method according to the fourth inventive aspect of the invention, and in particular after the step of laminating, has a reflected color gradient of ΔE≤5, wherein ΔE is

defined as: $\Delta E = \sqrt{\Delta L^{*2} + \Delta a^{*2} + \Delta b^{*2}}$ , and wherein ΔL*, Δa* and Δb* represent the variations in the reflected L*, a* and b* color coordinates of the coated portion of the automotive glazing measured from the other outer major surface of the glazing corresponding to the opposite surface where the reflected color gradient of $\Delta E \geq 5$ is measured.

In an embodiment, the color gradient of the at least one coated portion of the automotive glazing obtained by the method according to the fourth inventive aspect of the invention, and in particular after the step of laminating, is monotonic, i.e. of a single color shade that degrades. In another embodiment, the color gradient of the at least one coated portion of the automotive glazing obtained by the method according to the fourth inventive aspect of the invention, and in particular after the step of laminating, is non-monotonic, i.e. includes more than one color shade.

In an embodiment, the method according to the fourth inventive aspect of the invention comprises a further step of:

- depositing an additional thin-film coating (also called second thin-film coating) having at least one layer on at least a portion of the inner or outer major surfaces of the glass layers where the first graded thin-film coating is not arranged; wherein the step of depositing the second color thin-film coating comprises:

    - varying at least one deposition parameter during the step of depositing the at least one layer of the second thin-film coating to produce in at least a portion of the automotive glazing a reflected color gradient in at least one direction of $\Delta E$ equal to or greater than 5 across the coated portion of at least one of said inner or outer major surfaces of the glass layers, wherein $\Delta E$ is defined as: $\Delta E = \sqrt{\Delta L^{*2} + \Delta a^{*2} + \Delta b^{*2}}$, wherein $\Delta L^*$, $\Delta a^*$ and $\Delta b^*$ represent the variations in the reflected $L^*$, $a^*$ and $b^*$ color coordinates of the coated portion of the automotive glazing measured from one outer major surface of the outer major surfaces of the automotive glazing ,

    wherein the at least one deposition parameter is selected from the group consisting of:

    • the physical thickness of the deposited the at least one layer of the second thin-film coating, thereby resulting in a variation of the physical thickness of the at least one layer of the second thin-film coating;

    • the ratio of gases in a mixture and/or the gas flow rate of at least the working sputtering gas and the tuning gas, wherein;
    the working sputtering gas is preferably argon and the tuning gas, is preferably oxygen or nitrogen, thereby resulting in a variation of the index of refraction of the at least one layer of the second thin-film coating; and

    • a gradient of the strength of magnetic field along the sputtering target.

In some embodiments, depending on the required glazing stack configuration, the method according to the fourth inventive aspect of the invention comprises a further step of depositing one or more additional functional coating layers on top of or at the bottom of the one graded layer or the additional graded layer of the thin-film coating.

In some embodiments, the graded layer(s) of either the graded thin-film coating, the additional graded thin-film coating or both can be deposited on a respective flat glass layer. In a particular embodiment, the first and second glass layers of the automotive glazing are bent after the graded thin-film coating(s) is/are deposited.

In other embodiments, the graded layer(s) of either the graded thin-film coating, the additional graded thin-film coating or both can be deposited on a respective fully bent glass layer without any other additional bending step.

In other embodiments, the graded layer(s) of either the graded thin-film coating, the additional graded thin-film coating or both can also be deposited on a respective partially bent glass layer and then undergo an additional bending step to achieve the desired shape of the resulting glazing.

All the features described in this specification (including the claims, description and drawings) can be combined in any combination, with the exception of combinations of mutually exclusive features and/or steps.

**DESCRIPTION OF THE DRAWINGS**

These and other features and advantages of the invention will be seen more clearly from the following detailed description of a preferred embodiment provided only by way of illustrative and non-limiting example in reference to the attached drawings.

Figures 1 and 2    These figures show a side view of an automotive glazing comprising one color gradient thin-film coating according to different embodiments of the present invention.

Figures 3 to 5    These figures show a side view of an automotive glazing comprising two different color gradient thin-film coatings arranged on different glass surfaces of the glazing according to an alternative embodiment of the present invention.

Figures 6    This figure shows a side view of an automotive glazing comprising two different thin-film coatings and two non-graded color additional layers arranged interchangeably on different glass surfaces of the glazing according to an alternative embodiment of the present invention.

Figure 7    This figure shows a side view of a vehicle having a door with an automotive glazing according to an embodiment of the present invention.

Figure 8    This figure shows a side view of an automotive glazing comprising color gradient bonding interlayer according to rules ECE R43 / ANSI Z26 / CCC for safety glazing material requisite for driver visibility.

Figure 9    This figure shows a side view of an automotive glazing according to an embodiment of Figure 8, comprising one color gradient thin-film coating.

Figure 10    This figure shows two adjacent automotive glazing: a first graded color automotive glazing embodied as a panoramic windshield of a vehicle and a second automotive glazing embodied as an adjacent roof of a vehicle, wherein the roof has a color match, measured as $\Delta E$ for transmission and reflection of less than 3, with an end of the first automotive glazing of the panoramic windshield.

Figures 11 to 13    These figures show respective variants of the embodiment shown in Figure 10, with the same two adjacent automotive glazing: a first graded color automotive glazing embodied as a panoramic windshield of a vehicle and a second automotive glazing embodied as an adjacent roof of a vehicle, wherein the roof has a color match, measured as $\Delta E$ for transmission and reflection of less than 3, with the end of the first automotive glazing of the panoramic windshield.

Figure 14    This figure shows a perspective view of a shield provided in a sputtering chamber for manufacturing an automotive glazing according to an embodiment of the present invention.

Figure 15    This figure shows a perspective view of a supply pipe provided in a sputtering chamber for manufacturing an automotive glazing according to an embodiment of the present invention.

## DETAILED DESCRIPTION OF THE INVENTION

Once the object of the invention has been outlined, as will be appreciated by one skilled in the art, aspects of the present invention may be embodied as a product, systems or a method and are described hereinafter as non-limitative embodiments.

The Figures schematically show various embodiments of an automotive glazing (1, 1', 10, 15) for use in a roof, windshield, side window, rear window, rear quarter window, or a sidedoor of a vehicle; wherein the aim of the automotive glazing (1, 1', 10, 15) is to achieve unconventional exterior and interior aesthetics.

*Automotive glazing*

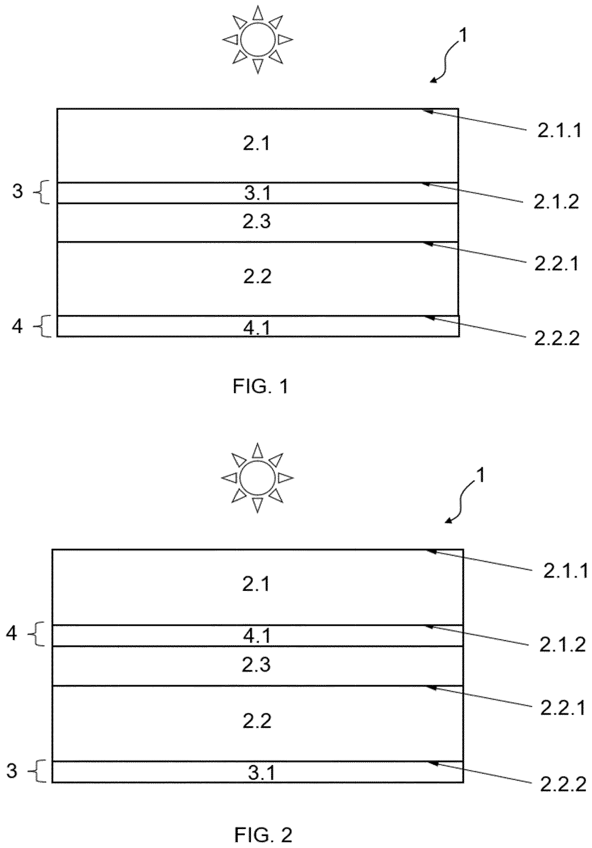

Figures 1 to 5 show an automotive glazing (1) comprising a first glass layer (2.1) with an outer major surface (2.1.1) and an inner major surface (2.1.2) opposite to the outer major surface (2.1.1), where the outer major surface (2.1.1) of the first glass layer (2.1) corresponds to the surface exposed to the external environment in an operating position of the automotive glazing (1). The automotive glazing (1) also comprises a second glass layer (2.2) with an inner major surface (2.2.1) and an outer major surface (2.2.2) opposite to the inner major surface (2.2.1), which corresponds to the surface exposed to the interior environment of a vehicle or a compartment where the automotive glazing (1) is installed in an operating position of the automotive glazing (1). The structure of the automotive glazing (1) also comprises at least one bonding interlayer (2.3), preferably a thermoplastic layer, arranged between the inner major surface (2.1.2) of the first glass layer (2.1) and the inner major surface (2.2.1) of the second glass layer (2.2). The automotive glazing (1) further comprises a graded thin-film coating (3) to achieve the desired aesthetic of the automotive glazing (1).

The graded thin-film coating (3) comprises at least one layer (3.1) having a gradient of at least 2% of the physical thickness and/or index of refraction in at least one direction of the at least one layer (3.1). This means that a change in the physical thickness of this at least one layer (3.1) results in a change in the visualized reflected color in the automotive glazing (1). The same occurs with a change in the oxygen or nitrogen content and/or in the argon gas, which results in a change of the index of refraction of the deposited material of the at least one layer (3.1) of the graded thin-film coating (3); so that, a change in an index of refraction also results in a change in the visualized reflected color in the automotive glazing (1).

The automotive glazing (1) comprises at least a coated portion having a reflected color gradient in at least one direction of ∆E equal to or greater than 5 across the coated portion of at least one of said inner or outer major surfaces (2.1.2, 2.1.1, 2.2.1, 2.2.2) of the glass layers (2.1, 2.2), wherein ∆E is defined as:

$$\Delta E = \sqrt{\Delta L^{*2} + \Delta a^{*2} + \Delta b^{*2}},$$

wherein ∆L*, ∆a* and ∆b* represent the variations in the reflected L*, a* and b* color coordinates of the coated portion of the automotive glazing (1, 10, 11, 15) measured from one outer major surface (2.1.1) of the outer major surfaces (2.1.1, 2.2.2).

In the preferred embodiments, the at least one bonding interlayer (2.3) is of a uniformly dark color, such as dark grey, which enhances the visual exterior aesthetic effect of the graded thin-film coating (3) disposed between the first glass (2.1) and the bonding interlayer (2.3).

Figure 1 shows that a graded thin-film coating (3), comprising at least one graded layer (3.1), is disposed on at least a portion of the inner major surface (2.1.2) of the first glass layer (2.1) and a non-graded thin-film coating (4), for example a dark uniform-color thin-film coating (4) comprising at least one non-graded layer (4.1), is disposed on at least a portion of the outer major surface (2.2.2) of the second glass layer (2.2). The embodiment shown in Figure 1 is intended to achieve a stronger graded color visual effect for a user when visually observing the automotive glazing (1) when installed in a vehicle from the outside, i.e. from in front of the outer major surface (2.1.1) of the first glass (2.1).

An alternative embodiment of the first inventive aspect of the invention is shown in Figure 2, where, in the same structure of the automotive glazing (1), the non-graded thin-film coating (4) is arranged on at least a portion of the inner major surface (2.1.2) of the first glass layer (2.1), and the graded thin-film coating (3) is arranged on at least a portion of the outer major surface (2.2.2) of the second glass layer (2.2). In this case, the automotive glazing (1) of Figure 2 is intended to achieve a stronger degraded color visual effect for a user when visually observing the automotive glazing (1) when installed in a vehicle from an inside the vehicle, i.e. from in front of the outer major surface (2.2.2) of the second glass (2.2).

Depending on the desired effect, the color gradient of the at least one coated portion of the automotive glazing (1) is monotonic, i.e. of a single color shade that degrades; or, in other embodiments, the color gradient of the at least one coated portion of the automotive glazing (1) is non-monotonic, i.e. includes more than one color shade.

Additionally, when different and new aesthetic forms are required, i.e. automotive glazing (1) with two-dimensional color patterns, the automotive glazing (1) is further provided with an additional graded thin-film coating (3') with a resulting color gradient in a different direction than the direction of the resulting first color gradient of the graded thin-film coating (3).

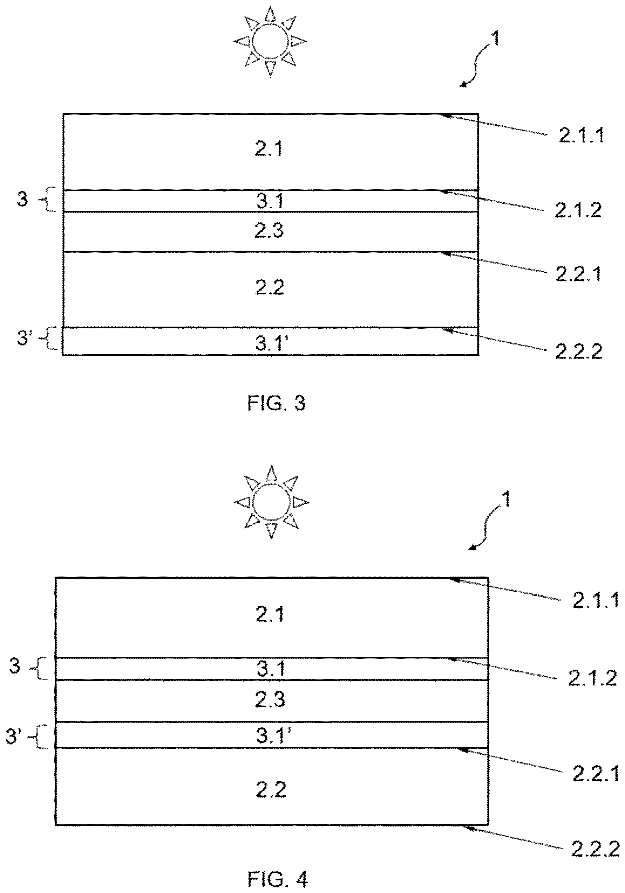

In this respect, the alternative embodiments of the automotive glazing (1) with two-dimensional color patterns are described in Figures 3 to 6. An alternative automotive glazing (1) with the same structure of glass layers (2.1, 2.2) and the bonding interlayer (2.3) as the previous embodiments comprises a graded thin-film coating (3) arranged in at least a portion of the inner major surface (2.1.2) of the first glass layer (2.1) and an second graded thin-film coating (3.1') arranged on at least a portion of the outer major surface (2.2.2) of the second glass layer (2.2), as shown in Figure 3.

Another alternative embodiment of the last described embodiment is shown in Figure 4, wherein the two graded thin-film coatings (3, 3') are arranged in at least a portion of the respective inner major surface (2.1.2, 2.2.1) of the first glass layer (2.1) and the second glass layer (2.2), respectively.

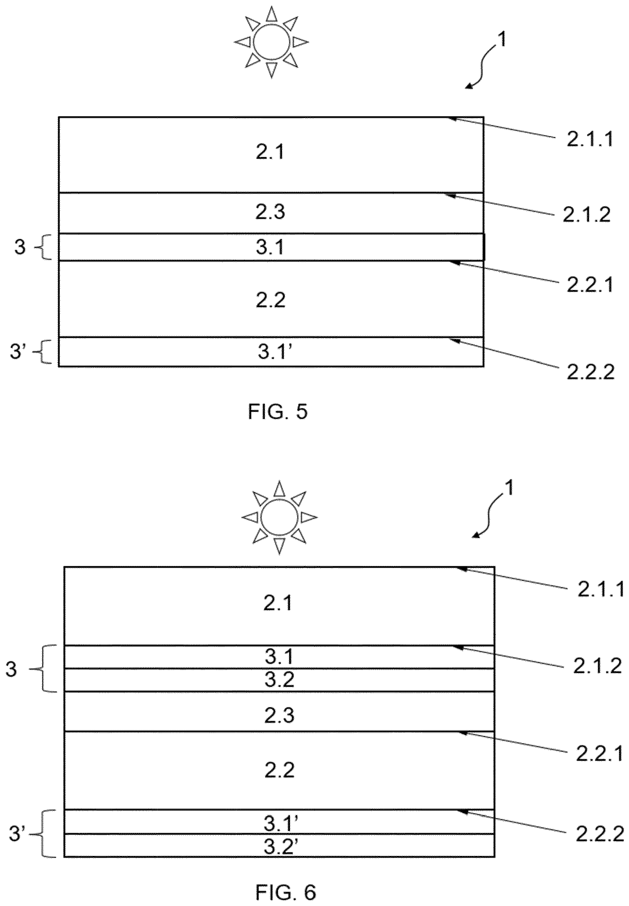

In a further alternative embodiment of automotive glazing (1) with two graded thin-film coatings (3, 3'), the automotive glazing (1) comprises a first graded thin-film coating (3) arranged on at least a portion of the inner major surface (2.2.1) of the second glass layer (2.2) and a second graded thin-film coating (3') arranged on at least a portion of the outer major surface (2.2.2) of the second glass layer (2.2), as shown in Figure 5.

The preferred embodiments are shown in the Figures 3 and 5, wherein the first graded thin-film coating (3.1) is disposed on at least a portion of the inner major surface (2.1.2, 2.2.1) and the second graded thin-film coating (3') is disposed on at least a portion of the outer major surface (2.2.2) of the automotive glazing (1). In these embodiments, especially and preferably, the additional second graded thin-film coating (3') has additional low-E attributes. For this purpose, the layer of the second thin-film coating comprises a material selected from the group consisting of a Low Emissivity material, preferably indium tin oxide.

Alternatively, as shown in Figure 6, the two graded thin-film coatings (3, 3') of Figures 3 to 5 each comprise an additional layer (3.2, 3.2') arranged on top of the one layer (3.1, 3.1') (3.2, 3.2'), wherein the respective additional layer (3.2, 3.2') has also gradient in at least one direction of due to at least one of its characteristics from the physical thickness or the index of refraction. That is to say, the resulting visual effect of color gradation in the automotive glazing (1) is achieved by a graded thickness of the two graded layers of the two graded thin-film coatings (3.1, 3.2, 3.1', 3.2') in at least one direction along the whole or a part of the glazing surface or by a graded distribution of the refractive index of the two graded layers of the two graded thin-film coatings (3, 3') in at least one direction along the whole or a part of the glazing surface, or by a combination of both; wherein the gradient of at least one of the said characteristics is at least 2%.

In order to simplify the drawings of the embodiments shown in Figures 1 to 6, each of the two graded thin-film coatings (3, 3') or the non-graded thin-film coating (4) is shown with only a respective single layer (3.1, 3.1', 4.1) in Figures 1 to 5 and with two respective layers (3.1, 3.2, 3.1', 3.2') in Figure 6. However, in an alternative embodiment, not shown in the figures, the thin-film coatings (3, 3', 4) may consist of more than one or two layers, thereby providing the automotive glazing (1) with more features than just a degraded color appearance but may also carry just the gradient-color function. Said additional non-graded layers may be included in the respective stack of the thin-film coatings (3, 3', 4) in the desired position, for example may be arranged on top of or at the bottom of the respective layer (3.1, 3.1', 4.1). Each additional layer or coating, however, typically has an additional function on top of being color-graded. The design is simplified to include the absolute minimum number of layers to perform that function (e.g., solar-control or low-E). The addition of functional layers is possible in any of the automotive glazing configurations described above.

In preferably embodiments, said additional layers comprise solar control functional layers, preferably Ag-based solar-control layers. Ag-inclusive functional layer(s) may be added to the front of a graded coating (3) to more efficiently reflect near-IR light to minimize heat absorption by the graded portion. Typically consisting of one or more of ZnAlOx, Ag, NiCrOx and ZnAlOx. Alternatively, an Ag-based solar-control coating may be modified to have at least one graded layer (preferably positioned between the at least one Ag-inclusive functional layer and the driver) to have the entire coating graded-color. In an alternative or additional embodiment to the non-graded solar control functional additional layers, said non-graded additional layers comprise low-E functional layers, preferably made of indium tin oxide.

The addition of functional layers is possible in any of the automotive glazing (1) configurations or embodiments described above.

Summarizing, the layers are in an order of one color graded coating (3.1) on top of which optionally, a second color graded coating with solar control properties (to reflect more near infrared to the surroundings) and/or optionally, a second color graded coating and finally, a second optional color graded coating with additional low emissivity attribute.

## EXAMPLES

### Example 1

In a first embodiment, example 1, the automotive glazing (1) has a graded thin-film coating (3) and a non-graded coating (4) according to the design of the Figure 1 with the following layers:

First glass (2.1mm) / SiNx(59.0nm) / NiCr(3.5nm) / NbOx(34.3nm) / NiCr(28.4nm) / SiAl (5.2nm) / NbOx(50.6nm) / NiCr(9.8nm) / NbOx(32.9nm) / SiOx(26.9nm) / bonding interlayer of PVB(0.76 mm) / Second glass (2.1mm) / SiOx(72.8nm) / ITO(102.1nm) / NiCr(4.4nm) / NbOx(14.2nm) / SiOx(130.4nm).

In this particular first example, the graded thin-film coating (3) is a layer stack comprising nine different gradient color thin-film layers (SiNx/NiCr/NbOx/NiCr/SiAl/NbOx/NiCr/NbOx/SiOx) and is deposited on the inner major surface (2.1.1) of the first glass layer (2.1). In this example 1, the graded thin-film coating (3) comprises a single layer of NbOx, 34.3 nm thick (ranging between 10 and 60 nm), with a gradient of at least 2% of the physical thickness and/or the index of refraction in at least one direction. The rest of the layers of the graded thin-film coating (3) are thus non-graded. The non-graded thin-film coating (4) is a layer stack comprising five different layers (SiOx/ITO/NiCr/NbOx/SiOx) and is deposited on the outer major surface (2.2.2) of the second glass layer (2.2).

Wherein at least the one graded layer (3.1) of the graded thin-film coating (3) stack has a gradient of at least 2% of its physical thickness and/or its index of refraction in at least one direction.

### Example 2

In a second embodiment, example 2, the automotive glazing (1) has two different graded thin-film coatings (3, 3') like in Figure 6, one deposited in each of the glass layers (2.1, 2.2), one on the inner major surface (2.1.1) of the first glass layer (2.1) and the other on the outer major surface (2.2.2) of the second glass layer (2.2) with the following design:

First glass (2.1mm) / SiNx(12.1nm) / NiCrOx(10.2nm) / NbOx(59.7nm) / NiCrOx(9.8nm) / NbOx(16.6nm) / SiOx(10.9nm) / bonding interlayer of PVB(0.76mm) / Second glass(2.1mm) / SiNx(6.7nm) / NiCrOx(21.1nm) / NbOx(55.8nm) / NiCrOx(5.4nm) / NbOx(44.1nm) / SiOx(6.3nm).

In this particular second example, the layers SiNx(12.1nm) / NiCrOx(10.2nm) / NbOx(59.7nm) / NiCrOx(9.8nm) / NbOx(16.6nm) / SiOx(10.9nm) form the first graded thin-film coating (3) stack and the layers SiNx(6.7nm) / NiCrOx(21.1nm) / NbOx(55.8nm) / NiCrOx(5.4nm) / NbOx(44.1nm) / SiOx(6.3nm) form the second graded thin-film coating (3') stack. In this example 2, the first graded thin-film coating (3) stack comprises a single layer of NbOx 16.6 nm thick (ranging between 10 and 30 nm) with a gradient of at least 2% of the physical thickness and/or the index of refraction in at least one direction. The rest of the layers of the first graded thin-film coating (3) are thus non-graded. The second graded thin-film coating (3') stack also comprises a single layer of NbOx 55.8 nm thick (ranging between 30 and 80 nm) with a gradient of at least 2% of the physical thickness and/or the index of refraction in at least one direction. The rest of the layers of the second graded thin-film coating (3') stack are thus non-graded.

In this example at least one layer (3.1) of the graded thin-film coating (3) stack has a gradient of at least 2% of its physical thickness and/or its index of refraction in at least one direction; and the at least one layer (3.1') of the second graded thin-film coating (3') stack has a gradient of at least 2% of its physical thickness and/or its index of refraction in the same or another direction different from the direction of the gradient in the first graded thin-film coating (3). Therefore, this particular second example achieves a gradient color in two different directions with a gradient of ΔE of at least 5.

*Roof, windshield, sidelite, backlite, rear quarter window or sidedoor for a vehicle with at least an automotive glazing & vehicle comprising at least a roof, a windshield, a sidelite, a backlite, a rear quarter window or a sidedoor with at least an automotive glazing.*

The automotive glazing (1) of the present invention is intended for vehicles, and more particularly for automobiles (e.g. an automotive roof, a windshield, a sidelite, a backlite, a rear quarter window or a sidedoor) such as passenger cars. Because of that, a second inventive aspect of the present invention provides a roof, a windshield, a sidelite, a backlite, a rear quarter window or a sidedoor for a vehicle comprising at least one automotive glazing (1) according to one of the embodiments described above. As mentioned above, a third inventive aspect of the present invention is a vehicle comprising at least a roof, a windshield, a sidelite, a backlite, a rear quarter window or a sidedoor according to one of the embodiments of the second inventive aspect of the invention.

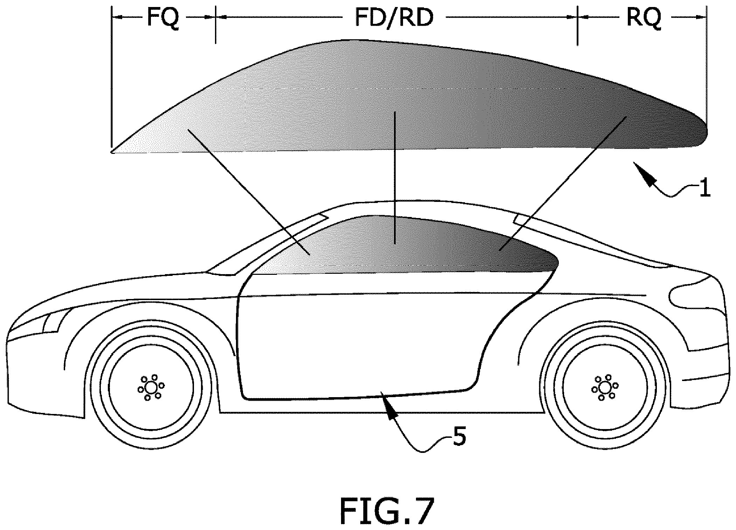

A particular embodiment of the second and third inventive aspects of the invention is shown in Figure 7, wherein a schematic representation of a vehicle, in particular a passenger car, is seen with a single sidedoor (5) in one of the sides of the car. This particular single sidedoor (5) incorporates a single window in the upper part and both extend from the rear to the front of the car. This particular case of the single window of the single sidedoor (5) shown has the additional functionality of comprising three distinct areas: a front quarter (FQ) window, a side window and a rear quarter (RQ) window.

As can be seen in Figure 7, the single window is formed by a single automotive glazing (1) according to the first inventive aspect having a graded thin-film coating (3) which produces a reflected color gradient in at least one direction without interference, from one end to the other side end in the automotive glazing (1). The aim is to achieve an automotive glazing (1) with a reflected color gradient which changes color or approaches transparency from the rear quarter (RQ) to the front quarter (FQ) of the single window. In Figure 7, it can be appreciated that the single automotive glazing (1) of the single window comprises three continuous sub-portions: a non-transparent color graded sub-portion located in a part corresponding to the rear quarter (RQ) window, an intermediate changing color intensity sub-portion located in a part corresponding to the middle window (FD/RD) of the window and a semi-transparent color graded sub-portion or a transparent (non-graded) sub-portion located in a part corresponding to the front quarter (FQ) window.

This effect can be achieved by the application of one or two graded thin-film coatings, or by the use of at least one color graded bonding interlayer, or by the combination of both techniques. In this way, a visual effect is achieved in which the joint between the gradients along the different sub-portions of the window is improved without interference.

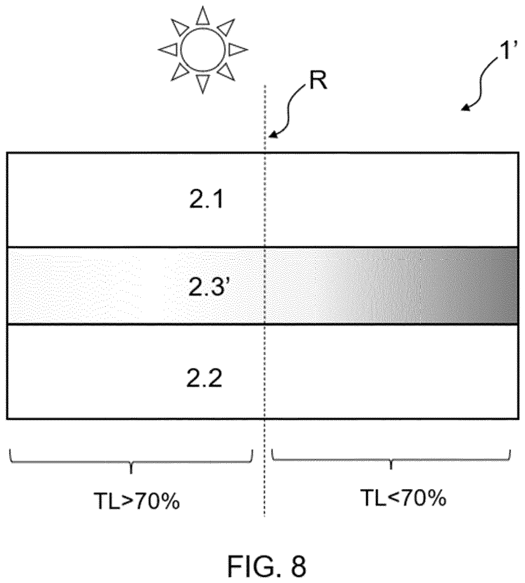

In this respect, Figure 8 describes a particular embodiment of the automotive glazing (1') comprising at least one color graded bonding interlayer (2.3'), wherein the at least one bonding interlayer (2.3') is arranged between the respective inner surfaces of the first glass layer (2.1) and the second glass layer (2.2). In this particular embodiment, the color graded bonding interlayer (2.3') is the element that produces the desired reflected color gradient in the automotive glazing (1'). To improve the compression of this figure, the gradient color of the bonding interlayer (2.3') is colored in this Figure 8.

A reference plane (R) is shown as a dashed line in Figures 8 to 13, when said automotive glazing (1, 1') is embodied as a sidedoor (5, 15), a windshield (10) or a roof (11) for a vehicle. The automotive glazing (1, 1') should comply with at least one of the following standards for safety glazing material requisite for driver visibility: Regulation No 43 of the Economic Commission for Europe of the United Nations (UN/ECE) - Uniform provisions concerning the approval of safety glazing materials and their installation on vehicles; ANSI Z26.1, 1997 Edition, December 15, 1997 - Safety Glazing Materials for Glazing Motor Vehicles and Motor Vehicle Equipment Operating on Land Highways - Safety Standard; or CCC Certification (China Compulsory Certification) Standard GB 9656-2003 - Safety glazing materials for road vehicles. According to the aforementioned standards, it should be complied that from a reference plane (R) shown in Figures 8 to 13 to the front of the driver, the automotive glazing (1, 1') must have a light transmission (TL) higher than 70%, i.e. be translucent and with good visibility, while the automotive glazing (1, 1') behind the reference plane (R) and the driver may have a light transmission (TL) less than 70%.

Additionally, the color graded bonding interlayer (2.3') of Figure 8 could be made of standard PVB or acoustic PVB or solar PVB or wedge PVB, wherein preferably, for standard and acoustic PVB, the color graded bonding interlayer (2.3') has a thickness between 0.51 and 0.83 mm, while if the color graded bonding interlayer (2.3') is made of wedge PVB, the thickness varies between 0.38 and 1.5 mm. These thicknesses help to obtain the desired reflected color gradient in the automotive glazing (1').

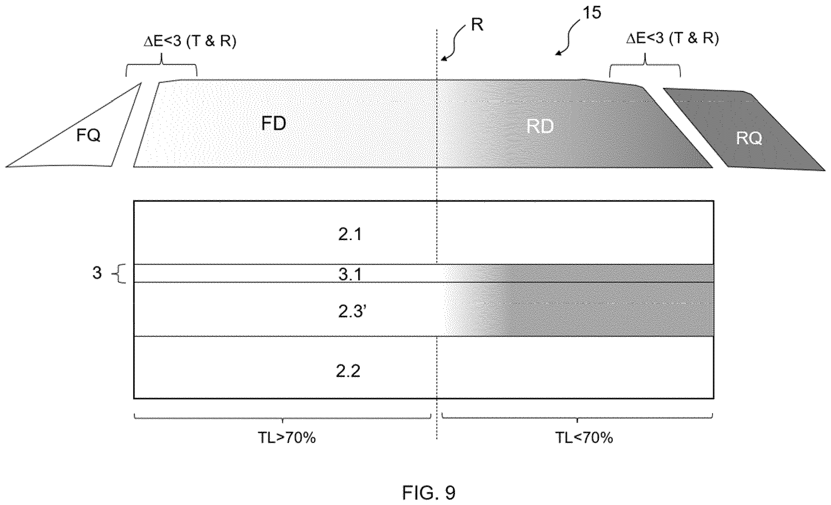

Figures 9 to 13 show various embodiments of the automotive glazing (1, 1') embodied as a sidedoor (15) or as a windshield (10) and roof (11) of a vehicle, for example of a passenger car. In all embodiments of Figures 9 to 13 the automotive glazing (1, 1') may comprise either at least one graded thin-film coating (3) (as is the case in Figures 1 to 7), at least one color graded bonding interlayer (2.3') (as is the case in Figure 8), or a combination of at least one graded thin-film coating (3) and at least one color graded bonding interlayer (as is the case in Figure 9). In order to improve the compression of the drawings, the gradient color of either the at least one color graded bonding interlayer (2.3'), the at least one graded thin-film coating (3, 3'), or both, is colored.

Figure 9 shows an automotive glazing according to the invention with at least a graded thin-film coating (3) arranged on at least the inner surface (2.1.2) of the first glass layer (2.1) and at least one color graded bonding interlayer (2.3') embodied as an automotive sidedoor glazing (15). Furthermore, the automotive sidedoor glazing (15) comprises two distinct zones, the front door area (FD) and the rear door area (RD), separated by a reference plane (R). The front door area (FD) of the automotive sidedoor glazing (15) must have a light transmittance (TL) higher than 70% while the rear door area (RD) can have a light transmittance (TL) lower than 70% to comply with the above mentioned standards by the color graded bonding interlayer (2.3'). Optionally, in cars which comprise rear quarter (RQ) windows and front quarter (FQ) windows, it is necessary that the junction areas between the front quarter (FQ) and front door area (FD) of the automotive sidedoor glazing (15) and the rear quarter (RQ) and rear door area (RD) of the automotive sidedoor glazing (15) have a color match, measured as $\Delta E$ for transmission and reflection less than 3, said color match being acceptable in the industry.

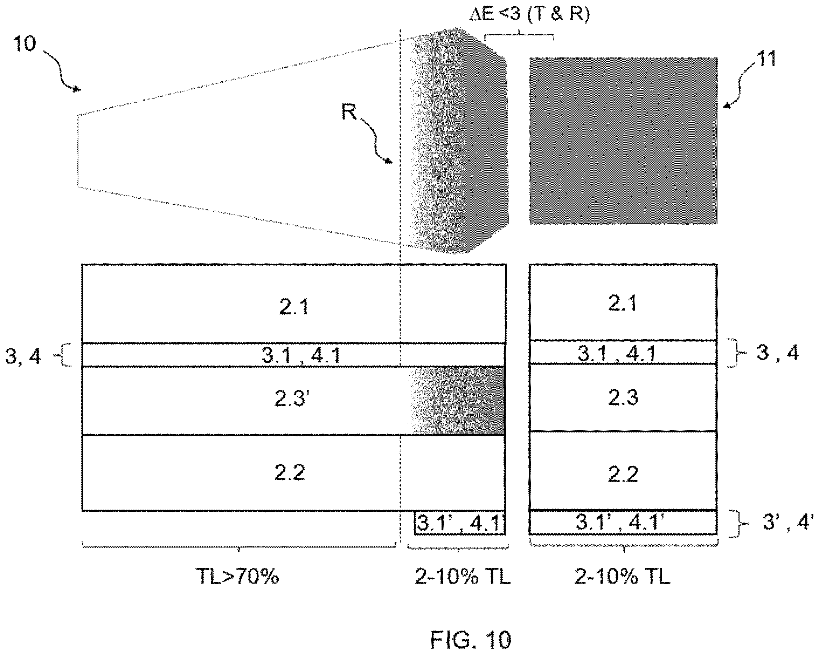

Further different embodiments are shown in Figures 10 to 13, wherein one automotive glazing is embodied as an automotive windshield glazing (10) and another automotive glazing is embodied as an automotive roof glazing (11), and wherein both glazing (10, 11) are configured in such a way that when they are installed in a vehicle they are disposed in adjacent positions. Thus, when they are installed, the respective adjacent parts of the windshield glazing (10) and the roof glazing (11) can be in contact with each other or at a distance below 30 millimeters. In the context of the present invention, the terms "adjacent positions" or "adjacent parts" should be understood as consequent zones free of obscuration band zones. Wherein the respective adjacent parts of both the automotive windshield glazing (10) and the automotive roof glazing (11) have a color match, measured as $\Delta E$ for transmission and reflection of less than 3.

In this regard, the automotive roof glazing (11) shown in Figures 10 to 13 is like the automotive glazing (1) described in Figures 1 to 6 or comprises two non-graded thin-film coatings (4, 4') disposed on at least a portion of the inner surface of the first glass layer (2.1) and of the outer surface (2.2.2) of the second glass layer (2.2). In all of Figures 10 to 13, the automotive windshield glazing (10) comprises at least: a first glass layer (2.1), a second glass layer (2.2), a color graded bonding interlayer (2.3') disposed between the first glass layer (2.1) and the second glass layer (2.2), and two thin-film coatings. One thin-film coating (3.1 or 4.1) is disposed on at least a portion of the inner surface (2.1.2) of the first glass layer (2.1) and the other thin-film coating (3.1' or 4.1') is disposed on a portion of the outer surface (2.2.2) of the second glass layer (2.2). The two thin-film coatings may be graded coatings (3, 3') or non-graded coatings (4, 4'). The choice of the combination of thin-film coatings depends on the desired visual effect. However, the driver visibility standards described above must always be met. In other embodiments (not shown), the automotive windshield glazing (10) can achieve the same enhanced effect of having two different color gradient layers by an automotive windshield glazing (10) comprising at least: a first glass layer (2.1), a second glass layer (2.2), at least one bonding interlayer (2.3, 2.3') disposed between the first glass layer (2.1) and the second glass layer (2.2), and at least one thin-film coating (3, 4) disposed on at least one of the inner and outer surfaces of the first and second glass layers; i.e. two different layers of the at least one thin-film coating (3) are graded and the at least one bonding interlayer (2.3) is of a non-gradient color; or the bonding interlayer (2.3') and one layer (3.1') of the at least one thin-film coating (3) are color gradient layers.

Figure 10 shows a particular embodiment of an automotive windshield glazing (10) and an adjacent glazing roof glazing (11). The automotive windshield glazing (10) comprises at least two thin-film coatings, one is disposed on at least a portion of the inner surface (2.1.2) of the first glass layer (2.1) and the other thin-film coating is disposed on at least a portion of the outer surface (2.2.2) of the second glass layer (2.2). Both thin-film coatings may be graded coatings (3, 3') or non-graded coatings (4, 4'). The choice of the combination of thin-film coatings depends on the desired visual effect. However, the driver visibility standards described above must always be met. As shown in Figure 10, the reference plane (R) indicates that towards the front area of the vehicle the automotive glazing (10) has a light transmittance (TL) higher than 70% and towards the rear area of the vehicle, the automotive glazing (10) and the automotive roof glazing (11) have a light transmittance (TL) between 2-10%. Additionally, the joint between the automotive windshield glazing (10) and the automotive roof glazing (11) results in a color match, measured as $\Delta E$ for transmission and reflection of less than 3.

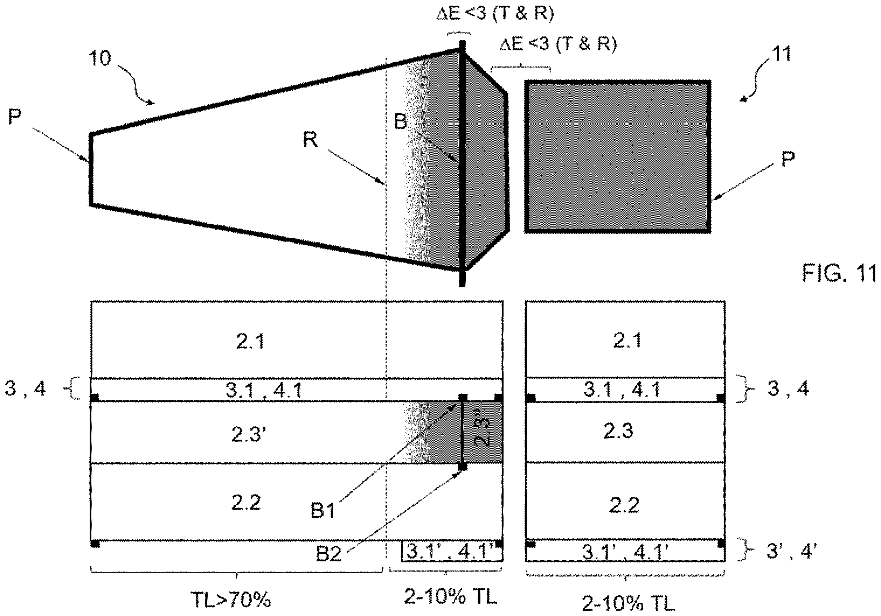

Figure 11 shows an alternative embodiment of the particular embodiment of Figure 10, wherein the automotive windshield glazing (10) comprises a color graded bonding interlayer (2.3') which, due to certain size limitations or intentional design, does not cover the entire size of the windshield, so the particular embodiment of an automotive windshield glazing (10) comprises two adjacent portions of a bonding interlayer (2.3', 2.3"). In this case, it is necessary that the automotive windshield glazing (10) further comprises at least one opaque band (B) which is needed to hide some elements, such as, busbars or edge seals or some optical defects like distortions or non-uniformity in color matching generated by the union of at least two adjacent portions of layers, in this particular embodiment the union of two adjacent portions of a bonding interlayer (2.3', 2.3"). In the context of the invention, the opaque band (B) is to be understood as an obscuration layer that needs to be opaque in the sense of difficulty to see through, rather than blocking all light. The typical light transmission is less than 5%, preferably less than 3%, and more preferably still equal to 0%. The obscuration layer may be black or of any color. The opaque band (B) may be of a solid color or composed of patterns. The obscuration layer may be an opaque coating, a ceramic frit, a black or colored interlayer (printed PVB or printed PET). In Figure 11 a first obscuration layer (B1) is disposed between the inner surface of the color graded bonding interlayer (2.3') and the outer surface of the first thin-film coating (3, 4) and a second obscuration layer (B2) is disposed on the inner surface (2.2.1) of the second glass layer (2.2). In other embodiments (not shown), the automotive windshield glazing (10) may further comprise a single obscuration layer (B1 or B2) or two obscuration layers (B1 and B2) disposed in different positions in the glazing (10) stack. The second obscuration layer (B2) is placed at any layer level between the intended hidden element or optical effect and the outer glass layer (2.2) while the first obscuration layer (B1) is placed at any layer level between the intended hidden element or optical effect and the inner glass layer (2.1). The first obscuration layer (B1) could also be also applied on the outer surface (2.2.2) of the second glass layer (2.2). In this embodiment of Figure 11, it is necessary that the second portion of bonding interlayer (2.3") of a solid color has a color match, measured as ΔE for transmission and reflection of less than 3, with the rear area of the first portion of the color gradient bonding layer (2.3'). For example, the second portion of the bonding interlayer (2.3"), which is a solid/uniform color, is a tinted PVB. In this case, two obscuration layers (B1 and B2) of an opaque band (B) are provided to hide possible distortions in the joint of the two adjacent portions (2.3', 2.3") of the bonding interlayer. Preferably, the opaque band (B) has a width of less than 20mm, preferably less than 15mm. The roof glazing (11) represented in Figure 11 comprises the following layers: a first glass layer (2.1), a first thin-film coating which may be color graded (3) or non-graded (4), an interlayer sub-stack, a second glass layer (2.2) and a second thin-film coating which may be color graded (3') or non-graded (4'). The interlayer sub-stack comprises at least one solid non-graded bonding layer (2.3) and at least one layer that may or may not include the same interlayer from the windshield glazing (10).

Both the windshield glazing (10) and the roof glazing (11) for a vehicle may include an obscuration band (P) disposed around part or all of the periphery of the windshield glazing (10) and the roof glazing (11). In the embodiment shown in Figure 11, both the windshield glazing (10) and the roof glazing (11) for a vehicle include an obscuration band (P) disposed around their entire respective periphery. Although such an obscuration band (P) is only shown in this Figure 11, it can also be applied in all the other embodiments described.

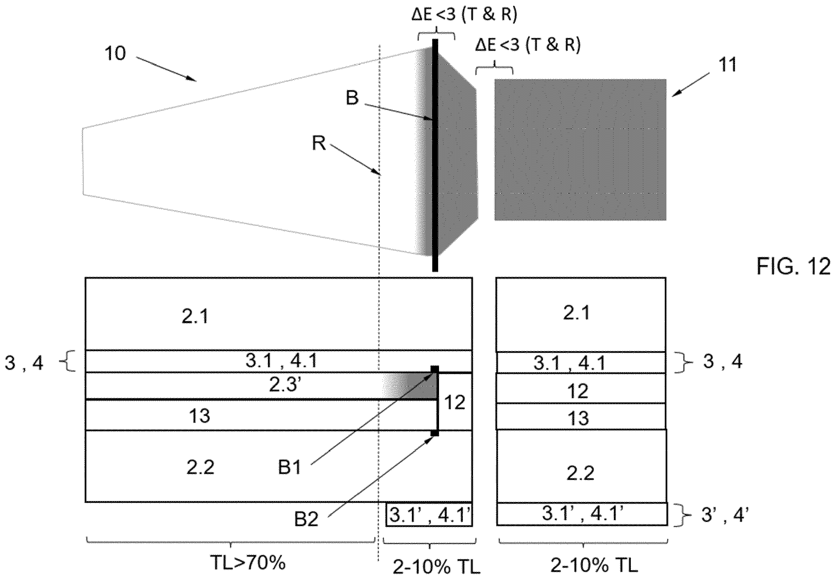

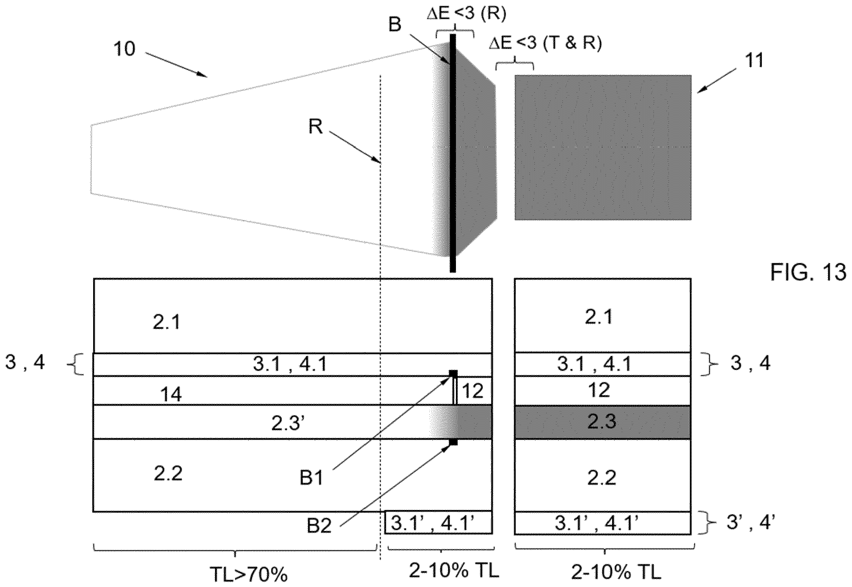

In Figures 12 and 13 other particular embodiments of an automotive windshield glazing (10) and an adjacent automotive roof glazing (11) of Figure 11 are shown. More specifically, when the color graded bonding interlayer (2.3') due to certain size limitations or intentional design does not cover the entire size of the windshield (10), so the particular embodiment of an automotive windshield glazing (10) comprises two adjacent portions of the interlayer and the roof glazing (11) comprises an interlayer sub-stack.

Specifically, Figure 12 shows the automotive windshield glazing (10) comprising in a first portion of the interlayer a color graded bonding interlayer (2.3') and an additional layer (13) arranged between the color graded bonding interlayer (2.3') and the inner surface (2.2.1) of the second glass layer (2.2). The automotive windshield glazing (10) further comprises in a second portion of the interlayer an intermediate sub-stack (12) which comprises at least one switchable film like PDLC, SPD PNLC, EC films or LC. The automotive roof glazing (11) also comprises an intermediate sub-stack (12) comprising at least one switchable film, and also one additional layer (13) disposed between the intermediate sub-stack (12) and the inner surface (2.2.1) of the second glass layer (2.2). The additional layers (13) serves to compensate the thickness stack of the automotive windshield glazing (10) or the automotive roof glazing (11), if required. The first portion of the interlayer of the automotive windshield glazing (10), that comprises the color graded bonding interlayer (2.3') and the additional layer (13), has a color match with the second portion of the intermediate sub-stack (12) measured as ΔE for transmission and reflection of less than 3 either on the darker mode or on the lighter mode of the switchable film. The roof glazing (11) shown in Figure 12 comprises the following layers: a first glass layer (2.1), a first thin-film coating (3, 4) which may be color graded (3) or non-graded (4) arranged on the inner surface (2.1.2) of the first glass layer (2.1), a second glass layer (2.2) and a second thin-film coating which may be color graded (3') or non-graded (4') arranged on the outer surface (2.2.2) of the second glass layer (2.2). The roof glazing (11) further comprises an interlayer comprising an intermediate sub-stack (12) that comprises at least one solid non-graded bonding layer and also at least one switchable film like PDLC, SPD PNLC, EC films or LC. In the roof glazing (11) shown in Figure 12, the part of the intermediate sub-stack (12) closer to the automotive roof glazing (11) also has a color match, measured as ΔE for transmission and reflection less than 3, with the front area (i.e., the area closer to the automotive roof glazing (11)) of the second portion of the interlayer (i.e., the intermediate sub-stack (12)).

The respective intermediate sub-stack (12) comprising at least one switchable film of the automotive windshield glazing (10) and of the automotive roof glazing (11) may or may not have the same layers. The use of these two switchable sub-stacks (12) comprising at least one switchable film, one in the automotive windshield glazing (10) and the other in the automotive roof glazing (11), may require the application of edge sealing or busbars that need to be hidden by an opaque band (B). As in Figure 11, in this Figure 12 two obscuration layers (B1 and B2) of an opaque band (B) are provided to hide the mentioned edge sealing or busbars. Preferably, the opaque band (B) has a width of less than 20mm, preferably less than 15mm.

Figure 13 shows another particular embodiment of an automotive windshield glazing (10) and an adjacent automotive roof glazing (11), wherein the respective adjacent parts of both the windshield glazing (10) and the automotive roof glazing (11) have a color match, measured as ΔE for transmission and reflection of less than 3. In this case, like in Figure 12, the automotive roof glazing (11) comprises an intermediate sub-stack (12) comprising at least one switchable film. The automotive windshield glazing (10) also comprises an intermediate sub-stack (12) comprising at least one switchable film disposed as a second portion of interlayer. Figure 13 shows the case where the at least one color gradient bonding interlayer (2.3') is deliberately designed to require an additional stack of switchable film, so that a color match, measured as ΔE<3, is achieved by reflection through the first thin-film coating of both the adjacent parts of the automotive windshield glazing (10) and the automotive roof glazing (11), which may be a color gradient thin-film coating (3) or a non-graded thin-film coating (4). The automotive windshield glazing (10) shown in Figure 13 comprises a stack having the following layers: a first glass layer (2.1), a first thin-film coating (3, 4) which may be color graded (3) or non-graded (4) disposed on the inner glass layer (2.1.2) of the first glass layer (2.1), a portion of an additional clear interlayers (14) with an adjacent portion of a sub-stack (12) comprising at least one switchable film, a graded color bonding interlayer (2.3'), a second glass layer (2.2) and a second thin-film coating which may be color graded (3') or non-graded (4'). The automotive roof glazing (11) shown in Figure 13 comprises the following layers: a first glass layer (2.1), a first thin-film coating (3, 4) which may be color graded (3) or non-graded (4), an intermediate sub-stack (12) comprising at least one switchable film, at least one solid/uniform non-graded bonding layer (2.3), a second glass layer (2.2) and a second thin-film coating which may be color graded (3') or non-graded (4') disposed on the outer surface (2.2.2) of the second glass layer (2.2). The intermediate sub-stack (12) of the automotive roof glazing (11) comprises at least one solid non-graded bonding layer (2.3) and also at least one switchable film like PDLC or SPD. The use of these two intermediate sub-stacks (12) comprising at least one switchable film, one in the windshield glazing (10) and the other in the automotive roof glazing (11), may require the application of edge sealing or busbars that need to be hidden by an opaque band (B). As in Figures 11 and 12, again in this Figure 13, two obscuration layers (B1 and B2) of an opaque band (B) may be provided to hide the mentioned edge sealing or busbars. Other positions of these two obscuration layers (B1 and B2) are possible. In other embodiments, a single opaque band (B) can be provided. Preferably, the opaque band (B) has a width of less than 20mm, preferably less than 15mm. In addition, the part of the sub-stack (12) comprising at least one switchable film closer to the automotive roof glazing (11) also has a color match, measured as ΔE for transmission and reflection of less than 3, with the front area (i.e., the area closer to the roof (11)) of the intermediate sub-portion of the automotive roof glazing (11) comprising at least one switchable film. In addition, the part of the at least one color gradient bonding interlayer (2.3') of the automotive windshield glazing (10) that it is closer to the automotive roof glazing (11) also has a color match, measured as ΔE for transmission and reflection of less than 3, with the front area (i.e. the area closer to the automotive roof glazing (11)) of the non-graded colored bonding interlayer (2.3) of the roof (11). The intermediate sub-stack (12) comprising at least one switchable film of the automotive windshield glazing (10) and the intermediate sub-stack (12) comprising at least one switchable film of the automotive roof glazing (11) comprise the same layers.

Although Figures 10 to 13 show two adjacent automotive glazing corresponding to a first graded color automotive glazing embodied as a panoramic windshield of a vehicle and a second automotive glazing embodied as an adjacent roof of a vehicle, the first graded color automotive glazing may also be embodied as a roof or a backlite of a vehicle.

*Method for manufacturing an automotive glazing*

The invention also relates, in a fourth inventive aspect, to a method for manufacturing an automotive glazing (1, 10, 11, 15) according to some embodiments. The method comprises providing a first glass layer (2.1) which has an outer major surface (2.1.1) and an inner major surface (2.1.2), wherein the outer major surface (2.1.1) is opposite to the inner major surface (2.1.2). The method also comprises providing a second glass layer (2.2) which have an inner major surface (2.2.1) and an outer major surface (2.2.2), wherein the outer major surface (2.2.2) is opposite to the inner major surface (2.2.1).

Having provided the two glass layers (2.1, 2.2), the next step of the method is to deposit at least one layer (3.1) of a graded thin-film coating (3) on at least a portion of at least one of said inner or outer major surfaces (2.1.2, 2.1.1, 2.2.1, 2.2.2) of the glass layers (2.1, 2.2).

The deposition of the at least one layer (3.1) of the graded thin-film coating (3) varies at least one deposition parameter during the at least one deposition step of at least one layer (3.1) of a thin-film coating (3) to produce in the automotive glazing (1, 11, 12, 15) a reflected color gradient in at least one direction of ΔE equal to or greater than 5 across the coated portion of at least one of said inner or outer major surfaces (2.1.2, 2.1.1, 2.2.1, 2.2.2) of the glass layers (2.1, 2.2).

Furthermore, the deposition parameter to be varied is selected from at least on the following parameters: the physical thickness of the deposited one layer (3.1) of a thin-film coating (3), the ratio of gases in a mixture and/or the gas flow rate of at least the working sputtering gas and the tuning gas, resulting in a variation of the index of refraction of the at least one layer (3.1) of the thin-film coating (3) or a gradient of the strength of magnetic field along the sputtering target (8). The working sputtering gas is preferably argon and the tuning gas is preferably oxygen or nitrogen.

In the following, the first (2.1) and second (2.2) glass layers are laminated together with at least one intermediate bonding interlayer (2.3) disposed between the respective inner major surfaces of the first (2.1) and second (2.2) glass layers.

Additionally, in alternative embodiments the method for manufacturing an automotive glazing (1) may comprise the deposition of a second graded thin-film coating (3.1') arranged on at least a portion of the outer major surface (2.2.2) of the second glass layer (2.2), as shown in Figure 3, when two-dimensional color patterns are required in the automotive glazing (1).

Optionally, after the step of depositing the at least one layer (3.1) of the thin-film coating (3), the method further comprises the step of depositing at least an additional graded layer (3.2) of the thin-film coating (3) on top of the at least one layer (3.1) of the thin-film coating (3).

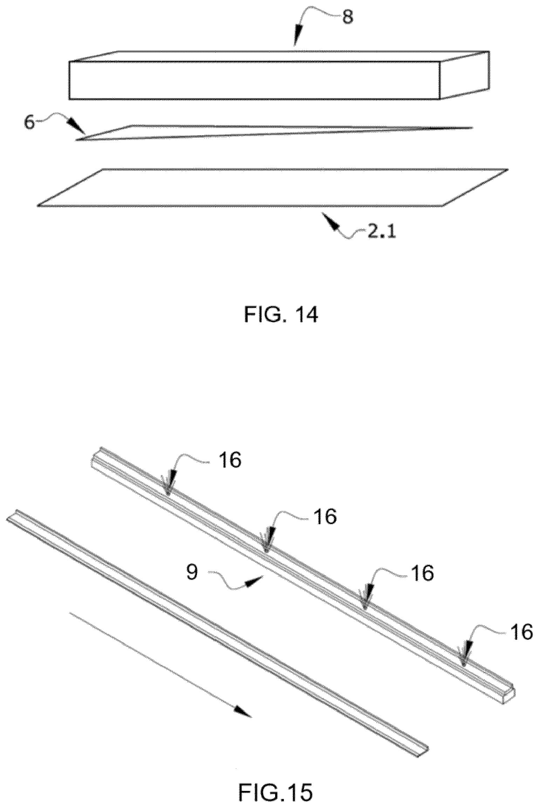

The deposition of either the at least one graded layer (3.1), the at least an additional graded layer (3.2) or both of the thin-film coating (3) is carried out by sputtering. Figure 14 shows that during the sputtering, a shield (6) of varying width is provided separated from the material target (8) and also from the glass layer (2.1, 2.2). The shield (6) of varying width extends along the material target (8). The shield (6) has the function to block the material from the material target (8) from being deposited on the glass layer (2.1, 2.2). The sputtering is performed within a sputtering chamber (not shown in Figure 14) to vary the at least one deposition parameter during the step of depositing the at least one layer (3.1) of a thin-film coating (3).

Furthermore, in the step of depositing the at least one layer (3.1) of the thin-film coating (3), at least a gas supply pipe (9) is provided in the interior of the sputtering chamber (not shown in Figure 15), wherein the gas supply pipe (9) comprises a plurality of openings (16) distributed at certain positions along the pipe (9), as can be observe in Figure 15, for a controllable gas distribution, thus allowing the variation of the at least one deposition parameter of the ratio of gases in a mixture or the gas flow rate of at least the working sputtering gas and the tuning gas, thereby resulting in a variation of the index of refraction of the at least one layer (3.1) of the thin-film coating (3) during the deposition step inside the sputtering chamber. In Figure 15, an arrow represents the direction of the gas flow gradient flowing inside the supply pipe (9) and progressively exiting the tube towards the sputtering chamber through the various openings (16).

As mentioned above in the specific examples, in an embodiment, depending on the required glazing stack configuration, the method further comprises the step of depositing one or more additional functional coating layers on top of or at the bottom of the one layer (3.1) of the thin-film coating (3).

## Claims

1. An automotive glazing (1, 10, 11, 15), comprising:

   - a first glass layer (2.1) having an outer major surface (2.1.1) and an inner major surface (2.1.2), wherein the outer major surface (2.1.1) is opposite to the inner major surface (2.1.2);
   - a second glass layer (2.2) having an inner major surface (2.2.1) and an outer major surface (2.2.2), wherein the outer major surface (2.2.2) is opposite to the inner major surface (2.2.1);
   - at least one bonding interlayer (2.3) arranged between the inner major surface (2.1.2) of the first glass layer (2.1) and the inner major surface (2.2.1) of the second glass layer (2.2); and
   - a thin-film coating (3) arranged on at least a portion of at least one of said inner or outer major surfaces (2.1.2, 2.1.1, 2.2.1, 2.2.2) of the glass layers (2.1, 2.2),

   wherein said thin-film coating (3) comprises at least one layer (3.1) having a gradient in at least one direction of at least one of its characteristics from the following list:

   a) physical thickness,
   b) index of refraction,

   wherein the gradient of at least one of said characteristics is at least 2%;

   the automotive glazing (1, 10, 11, 15) thus comprising at least a coated portion:

   having a reflected color gradient in at least one direction of ΔE equal to or greater than 5 across the coated portion of at least one of said inner or outer major surfaces (2.1.2, 2.1.1, 2.2.1, 2.2.2) of the glass layers (2.1, 2.2), wherein ΔE is defined as:

$$\Delta E = \sqrt{\Delta L^{*2} + \Delta a^{*2} + \Delta b^{*2}},$$

wherein $\Delta L^*$, $\Delta a^*$ and $\Delta b^*$ represent the variations in the reflected $L^*$, $a^*$ and $b^*$ color coordinates of the coated portion of the automotive glazing (1, 10, 11, 15) measured from one outer major surface (2.1.1) of the outer major surfaces (2.1.1, 2.2.2).

2. The automotive glazing (1, 10, 11, 15) according to claim 1, wherein the at least one bonding interlayer (2.3) is of a non-gradient color.

3. The automotive glazing (1, 10, 11, 15) according to claim 1, wherein the at least one bonding interlayer (2.3) comprises at least one layer comprising at least a graded color portion.

4. The automotive glazing (1, 10, 11, 15) according to any of the preceding claims, having a reflected color gradient of $\Delta E \leq 5$, wherein $\Delta E$ is defined as:

$$\Delta E = \sqrt{\Delta L^{*2} + \Delta a^{*2} + \Delta b^{*2}},$$

wherein $\Delta L^*$, $\Delta a^*$ and $\Delta b^*$ represent the variations in the reflected $L^*$, $a^*$ and $b^*$ color coordinates of the coated portion of the automotive glazing (1, 10, 11, 15) measured from the other outer major surface (2.2.2) of the automotive glazing (1, 10, 11, 15) corresponding to the opposite surface where the reflected color gradient of $\Delta E \geq 5$ is measured.

5. The automotive glazing (1, 10, 11, 15) according to any of the preceding claims, wherein the thin-film coating (3) further comprises at least one additional layer (3.2) arranged on the at least one layer (3.1) of the thin-film coating (3), said at least one additional layer (3.2) having a gradient in at least one direction of at least one of its characteristics from the following list:

   a) the physical thickness,
   b) the index of refraction,

wherein the gradient of at least one of the said characteristics is at least 2%.

6. The automotive glazing (1, 10, 11, 15) according to any of the preceding claims, wherein either the at least one layer (3.1) of the thin-film coating (3), the at least one additional layer (3.2) of the thin-film coating (3), or both, comprise one material selected from the group consisting of: SiNx, NiCrOx, SiAl, NbOx and SiOx.

7. The automotive glazing (1, 10, 11, 15) according to claim 6, wherein the thin-film coating (3) has a sequence of layers arranged in the following order starting from one of said inner or outer major surfaces (2.1.2, 2.1.1, 2.2.1, 2.2.2) of the first (2.1) or second (2.2) glass layer: SiNx, NiCrOx, SiAl, NbOx, NiCrOx, SiOx, SiNx, SiNx, NiCrOx, SiAl, NbOx, NiCrOx, NbOx, SiOx.

8. The automotive glazing (1, 10, 11, 15) according to any of claims 1 to 5, wherein either the at least one layer (3.1) of the thin-film coating (3), the at least one additional layer (3.2) of the thin-film coating (3), or both, comprise a material selected from the group consisting of:

   a) silver or another electrically conductive material or any combination of one or more conductive materials with one or more non-conductive materials; or
   b) Low Emissivity material, preferably indium tin oxide.

9. A roof (11), a windshield (10), a sidelite, a backlite, a rear quarter window or a sidedoor (15) for a vehicle, comprising at least one automotive glazing (1, 10, 11, 15) according to any of the preceding claims.

10. A sidedoor (15) for a vehicle according to claim 9, the sidedoor (15) having a length which partially or completely covers the area of the vehicle where the driver and the rear seat passengers sit, the sidedoor (15) preferably being a butterfly door or a gullwing door, wherein the sidedoor (15) comprises one automotive glazing (1, 10, 11, 15) according to any of the claims 1 to 8.

11. A vehicle comprising at least a roof (11), a windshield (10), a sidelite, a backlite, a rear quarter window or a sidedoor (15) according to claim 9 or 10.

12. A method for manufacturing an automotive glazing (1, 10, 11, 15) according to any of claims 1 to 8, the method comprising the steps of:

- providing a first glass layer (2.1) having an outer major surface (2.1.1) and an inner major surface (2.1.2), wherein the outer major surface (2.1.1) is opposite to the inner major surface (2.1.2);
- providing a second glass layer (2.2) having an inner major surface (2.2.1) and an outer major surface (2.2.2), wherein the outer major surface (2.2.2) is opposite to the inner major surface (2.2.1);
- depositing a thin-film coating (3) on at least a portion of at least one of said inner or outer major surfaces (2.1.2, 2.1.1, 2.2.1, 2.2.2) of the glass layers (2.1, 2.); wherein the step of depositing the thin-film coating (3) comprises depositing at least one layer (3.1) of the thin-film coating (3), wherein the step of depositing the at least one layer (3.1) of the thin-film coating (3) comprises:

- varying at least one deposition parameter during the step of depositing the at least one layer (3.1) of a thin-film coating (3) to produce in at least a portion of the automotive glazing (1, 10, 11, 15) a reflected color gradient in at least one direction of ∆E equal to or greater than 5 across the coated portion of at least one of said inner or outer major surfaces (2.1.2, 2.1.1, 2.2.1, 2.2.2) of the glass layers (2.1, 2.2), wherein ∆E is defined as: $\Delta E = \sqrt{\Delta L^{*2} + \Delta a^{*2} + \Delta b^{*2}}$, wherein ∆L*, ∆a* and ∆b* represent the variations in the reflected L*, a* and b* color coordinates of the coated portion of the automotive glazing (1, 10, 11, 15) measured from one surface (2.1.1) of the outer major surfaces (2.1.1, 2.2.2),

wherein the at least one deposition parameter is selected from the group consisting of:

• the physical thickness of the deposited at least one layer (3.1) of a thin-film coating (3), thereby resulting in a variation of the physical thickness of the at least one layer (3.1) of the thin-film coating (3);
• the ratio of gases in a mixture and/or the gas flow rate of at least the working sputtering gas and the tuning gas, wherein;
the working sputtering gas is preferably argon and the tuning gas, is preferably oxygen or nitrogen, thereby resulting in a variation of the index of refraction of the at least one layer (3.1) of the thin-film coating (3); and
• a gradient of the strength of magnetic field along the sputtering target; and

- laminating the first (2.1) and second (2.2) glass layers together with at least one bonding interlayer (2.3) arranged between the inner major surfaces of the first (2.1) and second (2.2) glass layers.

13. The method according to claim 12, wherein, after the step of depositing the at least one layer (3.1) of a thin-film coating (3), the step of depositing a thin-film coating further comprises the step of depositing the at least one additional layer (3.2) of the thin-film coating (3) on the at least one layer (3.1) of the thin-film coating (3).

14. The method according to any of claims 12 or 13, wherein either the step of depositing the at least one layer (3.1), the step of depositing the at least one additional layer (3.2), or both, of the thin-film coating (3) is by sputtering, and further comprising the step of providing a shield (6) of variable width along the target within a sputtering chamber (7) for varying the at least one deposition parameter during the step of depositing the at least one layer (3.1) and/or the at least one additional layer of the thin-film coating (3).

15. The method according to any of claims 12 to 14, wherein either the step of depositing the at least one layer (3.1), the step of depositing the at least one additional layer (3.2), or both, of the thin-film coating (3) is by sputtering, and further comprising the step of providing within a sputtering chamber at least one gas supply pipe (9) with a plurality of openings (16) along the pipe (9) and a controllable gas distribution for varying the at least one deposition parameter during the step of depositing the at least one layer (3.1) and/or the at least one additional layer of the thin-film coating (3).

16. The method according to any of claims 12 to 15, wherein either the step of depositing the at least one (3.1) of the thin-film coating (3), the step of depositing the at least one additional layer (3.2) of the thin-film coating (3), or both, comprises depositing a layer (3.1, 3.2) of a material selected from the group consisting of: SiNx, NiCrOx, SiAl, NbOx and SiOx.

17. The method according to any of claims 12 to 16, wherein the step of depositing the thin-film coating (3) comprises depositing the following materials of a sequence of layers arranged in the following order starting from one of said inner or outer major surfaces (2.1.2, 2.1.1, 2.2.1, 2.2.2) of the glass layers (2.1, 2.): $SiN_x$, $NiCrO_x$, $SiAl$, $NbO_x$, $NiCrO_x$, $SiO_x$, $SiN_x$, $SiN_x$, $NiCrO_x$, $SiAl$, $NbO_x$, $NiCrO_x$, $NbO_x$, $SiO_x$.

FIG. 1

FIG. 2

FIG. 3

FIG. 4

FIG. 5

FIG. 6

FIG.7

EP 4 530 063 A1

FIG. 8

FIG. 9

EP 4 530 063 A1

FIG. 10

EP 4 530 063 A1

FIG. 11

ΔE <3 (T & R)

ΔE <3 (T & R)

10

11

P

R

B

P

2.1

3.1 , 4.1

2.3'

2.3''

2.2

B1

B2

3.1' , 4.1'

3 , 4

2.1

3.1 , 4.1

2.3

2.2

3.1' , 4.1'

3 , 4

3' , 4'

TL>70%

2-10% TL

2-10% TL

EP 4 530 063 A1

35

FIG. 12

FIG. 13

FIG. 14

FIG.15

Europäisches
Patentamt

European
Patent Office

Office européen
des brevets

# EUROPEAN SEARCH REPORT

**Application Number**

EP 23 20 0618

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | FR 3 128 458 A1 (SAINT GOBAIN [FR]) 28 April 2023 (2023-04-28) | 1-6,8-16 | INV. B32B17/10 |
| A | * paragraphs [0001] - [0006], [0009], [0010], [0014], [0016], [0018] - [0022], [0025] - [0031] * <br> * claims 1-16 * | 7,17 | |
| Y | EP 4 140 726 A1 (KURARAY EUROPE GMBH [DE]) 1 March 2023 (2023-03-01) <br> * paragraphs [0001], [0008], [0010], [0011], [0016], [0022] - [0033], [0054] - [0064], [0069] - [0075], [0078], [0079], [0081] * <br> * claims 1-15 * <br> * figures 4-10 * | 1-3,5,6, 8-16 | |
| Y | US 2004/101694 A1 (LINGLE PHILIP J [US] ET AL) 27 May 2004 (2004-05-27) <br> * paragraphs [0010], [0011], [0022] - [0025], [0027] - [0037], [0048] - [0055]; tables 6,10 * <br> * claims 1-44 * <br> * figure 1 * | 4 | **TECHNICAL FIELDS SEARCHED (IPC)** <br><br> B32B |

The present search report has been drawn up for all claims

| Place of search | Date of completion of the search | Examiner |
|---|---|---|
| The Hague | 13 February 2024 | Girard, Sarah |

EPO FORM 1503 03.82 (P04C01)

## ANNEX TO THE EUROPEAN SEARCH REPORT
## ON EUROPEAN PATENT APPLICATION NO.

EP 23 20 0618

13-02-2024

| Patent document cited in search report | | Publication date | Patent family member(s) | | Publication date |
|---|---|---|---|---|---|
| FR 3128458 | A1 | 28-04-2023 | FR | 3128458 A1 | 28-04-2023 |
| | | | WO | 2023073304 A1 | 04-05-2023 |
| EP 4140726 | A1 | 01-03-2023 | NONE | | |
| US 2004101694 | A1 | 27-05-2004 | CA | 2535829 A1 | 03-03-2005 |
| | | | EP | 1673313 A2 | 28-06-2006 |
| | | | EP | 3348526 A1 | 18-07-2018 |
| | | | ES | 2657046 T3 | 01-03-2018 |
| | | | PL | 1673313 T3 | 30-04-2018 |
| | | | US | 2004101694 A1 | 27-05-2004 |
| | | | WO | 2005019125 A2 | 03-03-2005 |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Insight on Color. *Hunter Lab, Applications Note*, 2008, vol. 8 (7)